# EUROPEAN PATENT SPECIFICATION

(11) **EP 4 474 770 B1**
(45) Date of publication and mention of the grant of the patent: **22.04.2026**
(21) Application number: 24179846.1
(22) Date of filing: 04.06.2024
(51) Int. Cl.: G01C 21/36, G06Q 30/00

(54) **DESTINATION PROPOSAL SYSTEM, AND DESTINATION PROPOSAL METHOD**
ZIELVORSCHLAGSSYSTEM UND ZIELVORSCHLAGSVERFAHREN
SYSTÈME DE PROPOSITION DE DESTINATION ET PROCÉDÉ DE PROPOSITION DE DESTINATION

(30) Priority: 07.06.2023 JP 2023094403
(43) Date of publication of application: 11.12.2024
(73) Proprietor: Yamaha Hatsudoki Kabushiki Kaisha, Shizuoka-ken 438-8501, (JP)
(72) Inventor: Miyamoto, Yuya, Iwata-shi, Shizuoka-ken, 438-8501 (JP); Fujimoto, Katsuharu, Iwata-shi, Shizuoka-ken, 438-8501 (JP); Suzuki, Hirofumi, Iwata-shi, Shizuoka-ken, 438-8501 (JP); Oikawa, Kenta, Iwata-shi, Shizuoka-ken, 438-8501 (JP)
(74) Representative: Grünecker Patent- und Rechtsanwälte PartG mbB

(56) References cited:
- US-B2- 11 087 291
- US-B2- 11 652 777

## Description

The invention relates to a destination proposal system, a server for a straddle type vehicle destination proposal system, and a destination proposal method.

### Description of the Background Art

Destination proposal systems are known in the art. Such a destination proposal system is disclosed in Japanese Patent Publication No. JP 4062934 B2, for example.

The above Japanese Patent Publication No. JP 4062934 B2 discloses a travel-route creation assistance apparatus including a database storing locations of a plurality of facilities, a determiner configured to determine a destination from the plurality of facilities stored in the database in response to request from user's terminal, and a display director configured to direct the user's terminal to display the determined destination by transmitting the determined destination to the user's terminal. In order to respond to user's request to leave selection of a destination to the apparatus when the user who likes gameplay create a travel route, the determiner disclosed in the above Japanese Patent Publication No. JP 4062934 is configured to randomly select one of a plurality of facilities stored in the database after the apparatus randomly determines the destination. Also, when a user goes traveling to a destination, the user generally wants not only to go to the destination but to visit facilities around the destination. Also, considering that such a user has a meal in a restaurant and stays a hotel around the destination in some cases, if such a restaurant and a hotel do not exist around the destination, travel to the destination does not attract the user. For these reasons, the determiner disclosed in the above Japanese Patent Publication No. JP 4062934 is configured to exclude facilities (destinations) each of which has a number of facilities within a predetermined distance around the destination smaller than a predetermined number.

US 11 087 291 B2 describes a system for visualizing and adjusting travel plans, featuring personalized trip planning with dynamic updates based on user preferences, current location, stopovers, and travel modes.

US 11 652 777 B2 describes an electronic device configured to support group-based location sharing by transmitting current location data, generating user-defined groups, sending participation requests via a social network service upon certain events, and displaying members' location information on a map.

Here, although not disclosed in the above Japanese Patent Publication No. JP 4062934 B2, public transportation, cars, straddle type vehicles, and the like can be considered as means of transportation to the destination. In a case in which a user goes to a destination by a straddle type vehicle, it is desired to select and propose a destination suitable for the straddle type vehicle. However, the travel-route creation assistance apparatus (destination selection system) disclosed in the above Japanese Patent Publication No. JP 4062934 is not configured to determine and propose a destination taking into account means of transportation to the destination. For this reason, there is a problem that a destination unsuitable for a user who goes to the destination by a straddle type vehicle can be proposed.

The present invention is intended to solve the above problem, and one object of the present invention is to provide a destination proposal system, a server for a straddle type vehicle destination proposal system, and a destination proposal method capable of determining and proposing a destination satisfying conditions that a user of a straddle type vehicle desires and being suitable for the user who goes to the destination by the straddle type vehicle. The invention is defined by the independent claims. The dependent claims describe advantageous embodiments.

A destination proposal system according to a first aspect of the present invention is a destination proposal system for proposing a destination of a straddle type vehicle to a user by displaying the destination on a mobile terminal carried by the user, the destination proposal system includes a condition acquirer that acquires a desired condition(s), which is/are a condition(s) of the destination desired by the user, and information on a current location of the user through the mobile terminal carried by the user; a destination selector/transmitter that randomly selects a proper destination as user's destination from a plurality of destination candidates previously stored based on the desired condition(s) and the information on the current location, and transmits the destination selected to the mobile terminal; and a destination arrival determiner that determines whether the user arrives at the destination transmitted by the destination selector/transmitter.

In the destination proposal system according to the first aspect of the present invention, a condition acquirer that acquires a desired condition(s), which is/are a condition(s) of the destination desired by the user, and information on a current location of the user through the mobile terminal carried by the user; a destination selector/transmitter that randomly selects a proper destination as user's destination from a plurality of destination candidates previously stored based on the desired condition(s) and the information on the current location, and transmits the destination selected to the mobile terminal; and a destination arrival determiner that determines whether the user arrives at the destination transmitted by the destination selector/transmitter are provided. According to this configuration, because the mobile terminal can display a destination that is selected from candidates for the destination based on the desired conditions desired by the user of the straddle type vehicle and information on the current location of the user by using the destination selector/transmitter, it is possible to determine the destination satisfying a condition(s) that the user of the straddle type vehicle desires and being suitable for the user who goes to the destination by the straddle type vehicle, and to propose the destination to the user of the straddle type vehicle. Also, because the destination arrival determiner determines whether the user arrives at the destination transmitted by the destination selector/transmitter,
the destination proposal system can acquire additional information on tendency of user's preferences in destinations, and the like based on whether the user of the straddle type vehicle arrives at the destinations. Consequently, it is possible to provide the user with added value such as proposal of destinations more suitable for the user of the straddle type vehicle, and providing of bonuses to the user depending on whether the user arrives at the destinations.

In the destination proposal system according to the first aspect, the straddle type vehicle includes a communicator configured to be able to communicate with the mobile terminal; and the destination arrival determiner is configured to determine whether the user arrives at the destination based on the information on the current location transmitted from the mobile terminal and on whether the mobile terminal and the communicator are communicatively connected to each other. Here, in a case in which the destination arrival determiner determines whether the user arrives at the destination based only on the information on the current location of the user, it is difficult to determine whether the user moved to the destination by using the straddle type vehicle. According to the aforementioned configuration, to address this, because it is determined whether the user arrives at the destination based not only on the information on the current location of the user but also on communicative connection between the mobile terminal and the communicator of the straddle type vehicle, it is possible to properly determine whether the user arrives at the destination by using the straddle type vehicle.

In this configuration, it is preferable that a bonus provider that provides a predetermined bonus to the user if the destination arrival determiner determines that the user arrives at the destination is further provided. According to this configuration, because the user is provided with the predetermined bonus if the user arrives at the destination, it is possible to enhance the user to motivate to go to the destination by using the straddle type vehicle. Consequently, it is possible to provide a destination selection system attractive to the user as compared with a case in which the user is not provided with the predetermined bonus even if the user arrives at the destination.

In the destination proposal system in which the bonus provider is further provided, the straddle type vehicle includes a motorcycle; and the bonus provider is configured to provide the user with a point(s) as the predetermined bonus exchangeable for a gift relating to the motorcycle by the user if the user arrives at the destination. According to this configuration, because the user can change the provided point(s) to the gift relating to the motorcycle, it is possible to further enhance the user to motivate to go to the destination by using the motorcycle. Consequently, it is possible to provide a destination selection system more attractive to the user.

In this configuration, it is preferable that the destination selector/transmitter is configured to select two or more to-be-displayed destination candidates, which are candidates for the destination to be proposed to the user, from the plurality of destination candidates previously stored based on the desired condition(s) and the information on the current location, to randomly select the destination from two or more to-be-displayed destination candidates, and to transmit the destination selected and the two or more to-be-displayed destination candidates selected to the mobile terminal. Here, the user may go to the destination that is randomly selected and then to another destination. According to the aforementioned configuration, to address this, because the destination that is randomly selected, and two or more to-be-displayed destination candidates are transmitted to the mobile terminal so that the two or more to-be-displayed destination candidates are displayed together with the destination that is randomly selected, after moving to one of the destination and the to-be-displayed destination candidates displayed the user of the motorcycle can select another destination suitable for user's convenience if desiring to move to another destination. As a result, because the user can select, from the destination that is randomly selected and the two or more to-be-displayed destination candidates, one suitable for user's convenience by himself or herself, it is possible to improve usability of the user of the motorcycle.

In the destination proposal system in which the destination selector/transmitter is configured to transmit the destination and the two or more to-be-displayed destination candidates to the mobile terminal, it is preferable that the desired condition(s) includes/include one of a desired travel time, which is a travel time desired by the user of the motorcycle, and a desired travel distance, which is a travel distance desired by the user of the motorcycle; the condition acquirer is configured to acquire the one of the desired travel time and the desired travel distance through the mobile terminal; and the destination selector/transmitter is configured to select the destination based on the one of the desired travel time and the desired travel distance, and the information on the current location. According to this configuration, the user of the motorcycle can easily select a destination suitable for motorcycle user's desire based on the travel time or the travel distance by selecting the desired travel time or the desired travel distance.

In this configuration, it is preferable that the condition acquirer is configured to acquire the desired condition(s), the information on the current location, and motorcycle-type information, which is information on a type of the motorcycle owned by the user, through the mobile terminal; and the destination selector/transmitter is configured to select the destination based on the desired condition(s), the information on the current location, and the motorcycle-type information acquired by the condition acquirer through the mobile terminal. Here, in a case in which the type of the motorcycle owned by the user is a small type, it will often be difficult for the user to comfortably ride the motorcycle if an altitude difference between the destination and the current location is large. Contrary to this, in a case in which the type of the motorcycle owned by the user is a large type, it will often be difficult for the user to ride the motorcycle if roads between the destination and the current location include a narrow road. According to the aforementioned configuration in which the destination is selected based on the desired condition(s), the information on the current location and the motorcycle-type information to address this, because a destination suitable for the type of the motorcycle owned by the user (whether the motorcycle is a small or large type) in addition to the desired condition(s) and the information on the current location, it is possible to show, to the user, a destination at which the user can comfortably arrive by using the motorcycle owned by the user. Consequently, it is possible to provide a destination selection system further more attractive to the user who likes motorcycle riding.

In the destination proposal system in which the destination is selected based on the desired condition(s), the information on the current location and the motorcycle-type information, it is preferable that the destination selector/transmitter is configured to select the destination of a route passing through a waypoint suitable for motorcycle riding based on the desired condition(s), the motorcycle-type information, and the information on the current location acquired by the condition acquirer through the mobile terminal. According to this configuration, because a destination of a route that is suitable for the type of the motorcycle owned by the user (whether the motorcycle is a small or large type) and passing through a waypoint suitable for comfortable motorcycle riding, it is possible to provide a destination selection system capable of further improving satisfaction to the users who likes motorcycle riding.

In this configuration, it is preferable that the desired conditions further include a desired waypoint, which is the waypoint desired by the user of the motorcycle; the condition acquirer is configured to acquire the one of the desired travel time and the desired travel distance, and the desired waypoint through the mobile terminal; and the destination selector/transmitter is configured to select the destination based on the one of the desired travel time and the desired travel distance, the desired waypoint, the motorcycle-type information, and the information on the current location. Here, there are needs for mountain-side winding road riding or for riding on a road near the sea depending on motorcycle users. According to the aforementioned configuration in which a destination is selected based on the desired conditions including the desired waypoint, which is the waypoint desired by the user, to address this, the user can select the destination of a route passing through the waypoint in accordance with user's need. Consequently, it is possible to provide a destination selection system capable of improving satisfaction to the user.

In the destination selection system in which the destination selector/transmitter is configured to select the destination of a route passing through a waypoint suitable for motorcycle riding based on the desired condition(s), the motorcycle-type information, and the information on the current location, it is preferable that the desired conditions further include a desired facility, which is a facility desired by the user of the motorcycle; the condition acquirer is configured to acquire the one of the desired travel time and the desired travel distance, and the desired facility through the mobile terminal; and the destination selector/transmitter is configured to select the destination based on the one of the desired travel time and the desired travel distance, the desired facility, the motorcycle-type information, and the information on the current location. According to this configuration, the user of the motorcycle can select a destination of a route passing through the desired facility, which is a facility desired by the user. Consequently, because the user can be shown not merely the destination but the destination including a waypoint in accordance with user's desire, it is possible to provide a destination selection system capable of improving satisfaction to the user of the motorcycle.

In the destination selection system in which the straddle type vehicle includes a motorcycle, it is preferable that the destination selector/transmitter is configured to be able to transmit the destination randomly selected to the mobile terminals of a plurality of users who have a group motorcycle ride as the user in a motorcycling group formed by the plurality of users. According to this configuration, because the destination that is randomly selected is transmitted to the mobile terminals of the users in the motorcycling group, the users in the motorcycling group can easily share the destination. Consequently, it is possible to improve usability of the users who have a group motorcycle ride in the motorcycling group.

In this configuration, it is preferable that the destination selector/transmitter is configured to acquire, from the mobile terminals, information on inputs of selections of one by the users in the motorcycling group from the candidates for the destination that are randomly selected, and to select one of the candidates for the destination that has a highest number of selections as the destination. According to this configuration, because opinions of the users in the motorcycling group can be reflected on proposal of the destination, it is possible to suppress increase of a burden on a specific user as compared with a case in which users who have a group motorcycle ride to the destination that is selected by one of the users in the motorcycling group.

In the destination proposal system in which the destination selector/transmitter is configured to be able to transmit the destination randomly selected to the mobile terminals of the plurality of users who have the group motorcycle ride, it is preferable that the destination selector/transmitter is configured to be able to transmit, to the mobile terminals of the users in the motorcycling group, the destination selected by a representative of the motorcycling group from the candidates for the destination randomly selected. According to this configuration, because the users in the motorcycling group share the destination that is selected by the representative of the motorcycling group so that the representative can be freed from time and effort to transmit (a burden of transmitting) the destination to each user in the motorcycling group, it is possible to improve usability of the representative.

In the destination selection system in which the destination selector/transmitter is configured to be able to transmit the destination selected to the mobile terminals of the plurality of users who have the group motorcycle ride, it is preferable that the point(s) is/are able to be provided from a predetermined user to another user in the motorcycling group; and the bonus provider is configured to acquire information on the user who is provided with the point(s) from the mobile terminal, and to provide the point(s) to the another user based on the information acquired on the user who is provided with the point(s). According to this configuration, the point(s) can be provided between the users in the motorcycling group. Consequently, even in a case in which a specific user has a burden, for example in a case in which a representative determines the destination, reduction of satisfaction of the specific user can be prevented by providing the point(s) to the specific user from other users.

A destination proposal method according to a second aspect of the present invention is a destination proposal method for proposing a destination of a straddle type vehicle to a user by displaying the destination on a mobile terminal carried by the user, the destination proposal method including acquiring a desired condition(s), which is/are a condition(s) of the destination desired by the user, and information on a current location of the user; randomly selecting a proper destination as user's destination from a plurality of destination candidates previously stored based on the desired condition(s) and the information on the current location; transmitting the destination selected to the mobile terminal; displaying the destination transmitted on the mobile terminal; and determining whether the user arrives at the destination.

In the destination proposal method according to the second aspect of the present invention, as discussed above, randomly selecting a proper destination as user's destination from a plurality of destination candidates previously stored; transmitting the destination selected to the mobile terminal; and displaying the destination transmitted on the mobile terminal are provided. According to this configuration, it is possible to provide a destination proposal method capable of determining and proposing a destination satisfying a condition(s) that a user of a straddle type vehicle desires and being suitable for the user who goes to the destination by the straddle type vehicle similar to the destination proposal system according to the first aspect. Also, in the destination proposal method according to the third aspect of the present invention, as discussed above, determining whether the user arrives at the destination is provided. Consequently, it is possible to provide a destination proposal method capable of providing the user with added value such as proposal of destinations more suitable for the user of the straddle type vehicle, and providing of bonuses to the user depending on whether the user arrives at the destinations similar to the destination proposal system according to the first aspect.

In the destination proposal method according to the second aspect, it is preferable that the straddle type vehicle includes a communicator configured to be able to communicate with the mobile terminal; and it is determined whether the user arrives at the destination based on the information on the current location transmitted from the mobile terminal and on whether the mobile terminal and the communicator are communicatively connected to each other in the determining whether the user arrives at the destination. According to the aforementioned configuration, it is possible to provide a destination proposal method capable of properly determining whether the user arrives at the destination by using the straddle type vehicle similar to the destination proposal system according to the first aspect.

In this configuration, it is preferable that providing a predetermined bonus to the user if the user arrives at the destination is further provided. According to the aforementioned configuration, it is possible to provide a destination proposal method attractive to the user as compared with a case in which the user is not provided with the predetermined bonus even if the user arrives at the destination similar to the destination proposal system according to the first aspect.

In the destination proposal method that includes providing a predetermined bonus to the user if the user arrives at the destination, it is preferable that the straddle type vehicle includes a motorcycle; and the user is provided with a point(s) as the predetermined bonus exchangeable for a gift relating to the motorcycle by the user in the providing the predetermined bonus to the user if the user arrives at the destination. According to this configuration, because the user is provided with the point(s) exchangeable for a gift relating to the motorcycle, it is possible to further enhance the user to motivate to go to the destination by using the motorcycle, and as a result it is possible to provide a destination proposal method more attractive to the user similar to the destination proposal system according to the first aspect.

In this configuration, it is preferable that the randomly selecting a proper destination as the destination includes selecting two or more to-be-displayed destination candidates, which are candidates for the destination to be proposed to the user, from the plurality of destination candidates previously stored based on the desired condition(s) and the information on the current location, and randomly selecting the destination from two or more to-be-displayed destination candidates selected; that the destination selected and the two or more to-be-displayed destination candidates are transmitted to the mobile terminal in the transmitting the destination selected to the mobile terminal; and that the destination and the two or more to-be-displayed destination candidates transmitted are displayed in the displaying the destination transmitted on the mobile terminal. According to this configuration, because the user can select, from the destination that is randomly selected and the two or more to-be-displayed destination candidates, one suitable for user's convenience by himself or herself, it is possible to provide a destination proposal method capable of improving usability of the user of the motorcycle similar to the destination proposal system according to the first aspect.

In the destination proposal method including transmitting the destination and the plurality of destination candidates to the mobile terminal, it is preferable that the desired condition(s) includes/include one of a desired travel time, which is a travel time desired by the user of the motorcycle, and a desired travel distance, which is a travel distance desired by the user of the motorcycle; the destination proposal method further includes transmitting the one of the desired travel time and the desired travel distance through the mobile terminal; and that the destination is selected based on the one of the desired travel time and the desired travel distance transmitted from the mobile terminal, and the information on the current location in the randomly selecting the proper destination as the destination. According to this configuration, it is possible to provide a destination proposal method allowing the user of the motorcycle to easily select a destination suitable for motorcycle user's desire based on the travel time or the travel distance similar to the destination proposal system according to the first aspect.

In this configuration, it is preferable that the desired condition(s), the information on the current location, and motorcycle-type information, which is information on a type of the motorcycle owned by the user, are transmitted from the mobile terminal in the transmitting the one of the desired travel time and the desired travel distance from the mobile terminal; and that the destination is selected based on the desired condition(s), the information on the current location, and the motorcycle-type information transmitted from the mobile terminal in the randomly selecting the proper destination as the destination. According to this configuration, it is possible to provide a destination proposal method further more attractive to the user who likes motorcycle riding similar to the destination proposal system according to the first aspect.

The foregoing and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a simplified diagram of a destination proposal system according to a first embodiment.
FIG. 2 is a schematic diagram illustrating desired conditions used in the destination proposal system according to the first embodiment.
FIG. 3 is a schematic diagram showing a screen displayed in selection of a desired travel time by a user in the destination proposal system according to the first embodiment.
FIG. 4 is a schematic diagram showing a screen displayed in selection of a desired travel distance by the user in the destination proposal system according to the first embodiment.
FIG. 5 is a schematic diagram illustrating a configuration in which a destination is randomly selected from a plurality of destination candidates in the first embodiment.
FIG. 6 is a schematic diagram showing a screen showing the destination randomly selected in the destination proposal system according to the first embodiment.
FIG. 7 is a schematic diagram showing a screen displayed in successful check-in in the destination proposal system according to the first embodiment.
FIG. 8 is a flowchart illustrating processes of randomly selecting and proposing a destination in the destination proposal system according to the first embodiment.
FIG. 9 is a flowchart illustrating processes of determining whether the user arrives at the destination in the destination proposal system according to the first embodiment.
FIG. 10 is a flowchart illustrating processes of generating destination candidates in the destination proposal system according to the first embodiment.
FIG. 11 is a simplified diagram of a destination proposal system according to a second embodiment.
FIG. 12 is a schematic diagram illustrating desired conditions used in the destination proposal system according to the second embodiment.
FIG. 13 is a schematic diagram showing a screen displayed in selection of a desired travel time and a desired waypoint by a user in the destination proposal system according to the second embodiment.
FIG. 14 is a schematic diagram illustrating a configuration in which some destination candidates are selected from a plurality of destination candidates based on the desired travel time in the second embodiment.
FIG. 15 is a schematic diagram illustrating a configuration in which destination candidates are further selected based on the desired waypoint from the some destination candidates that have been selected based on the desired travel time in the destination proposal system according to the second embodiment.
FIG. 16 is a flowchart illustrating processes of randomly selecting and proposing a destination in the destination proposal system according to the second embodiment.
FIG. 17 is a simplified diagram of a destination proposal system according to a third embodiment.
FIG. 18 is a schematic diagram illustrating desired conditions used in the destination proposal system according to the third embodiment.
FIG. 19 is a schematic diagram showing a screen displayed in selection of a desired travel time and a desired waypoint by a user in the destination proposal system according to the third embodiment.
FIG. 20 is a schematic diagram illustrating a configuration in which some destination candidates are selected from a plurality of destination candidates based on the desired travel time in the third embodiment.
FIG. 21 is a schematic diagram illustrating a configuration in which destination candidates are further selected based on a desired facility from the some destination candidates that have been selected based on the desired travel time in the destination proposal system according to the third embodiment.
FIG. 22 is a flowchart illustrating processes of randomly selecting and proposing a destination in the destination proposal system according to the third embodiment.

### DESCRIPTION OF THE PREFERRED EMBODIMENT

Embodiments embodying the present invention will be described with reference to the drawings.

### First Embodiment

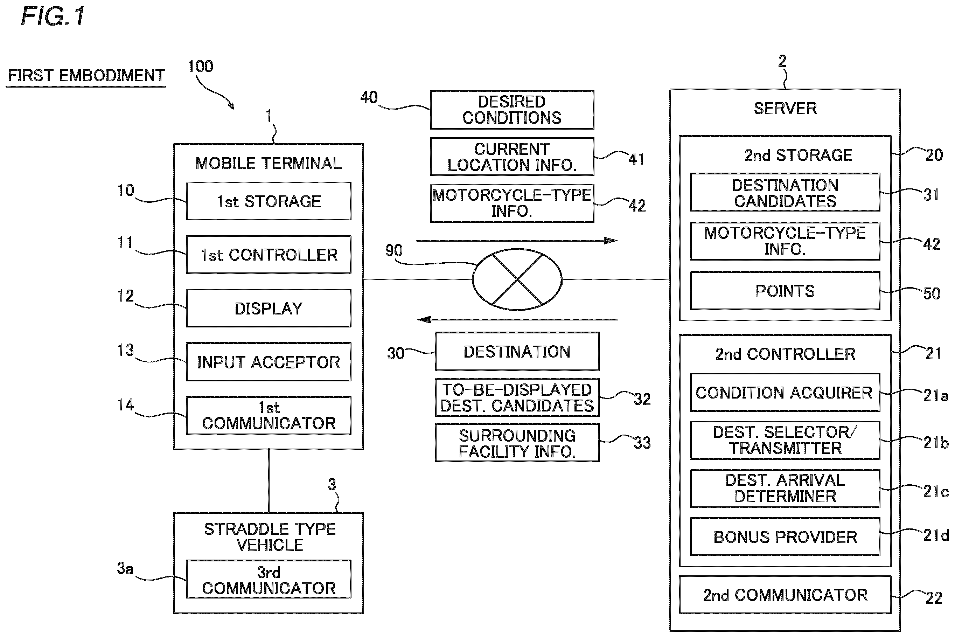

The following description describes a configuration of a destination proposal system 100 according to a first embodiment with reference to FIGS. 1 to 7. The destination proposal system 100 is a system for selecting a destination 30 of a straddle type vehicle 3. In the first embodiment, a motorcycle is illustrated as an example of the straddle type vehicle 3.

### (Configuration of Destination Selection System)

As shown in FIG. 1, the destination proposal system 100 is configured to show the destination 30 of the straddle type vehicle 3 selected in a server 2 to a user by displaying the destination 30 on a mobile terminal 1 carried by the user. The mobile terminal 1 and the server 2 are wirelessly connected to each other via a network 90. The network 90 includes the Internet, for example. The server 2 is an example of a "server for a straddle type vehicle destination proposal system" in the claims.

The mobile terminal 1 is configured to display the destination 30 of the straddle type vehicle 3. Also, the mobile terminal 1 is configured to transmit desired conditions 40, information on a current location 41, and motorcycle-type information 42, which is information on a type of the motorcycle owned by the user, described later to the server 2. In the first embodiment, the mobile terminal 1 includes a first storage 10, a first controller 11, a display 12, an input acceptor 13, a first communicator 14. The motorcycle-type information 42 includes information on the motorcycle, its displacement, small/large, and the like, for example.

The first storage 10 is configured to store the destination 30, and the like, transmitted from the server 2 via the network 90. The first storage 10 includes a nonvolatile storage, such as an HDD (Hard Disk Drive) or an SSD (Solid State Drive), for example.

The first controller 11 is configured to control parts of the mobile terminal 1. The first controller 11 includes a CPU (Central Processing Unit), a memory such as ROM (read only memory) and a RAM (random access memory).

The display 12 is configured to display the destination 30 transmitted from a second controller 21 of the server 2 via the network 90. For example, the display 12 includes a display device such as an LCD monitor or an organic EL (Electro Luminescence) monitor.

The input acceptor 13 is configured to accept operating inputs from the user. The input acceptor 13 includes an input device such as a touch panel. In the first embodiment, the display 12 and the input acceptor 13 are integrally constructed.

The first communicator 14 is configured to wirelessly connect the mobile terminal 1 and the server 2 to each other via the network 90. Also, the first communicator 14 is configured to wirelessly connect to a third communicator 3a, which will be described later. In the first embodiment, the first communicator 14 is configured to wirelessly connect to the third communicator 3a by using Bluetooth (registered trademark) or Wi-Fi, for example. The first communicator 14 includes a wireless communication module, for example.

As shown in FIG. 1, the server 2 includes a second storage 20, the second controller 21, and a second communicator 22.

The second storage 20 is configured to previously store a plurality of destination candidates 31, which are candidates for the destination 30. In the first embodiment, the destination candidates 31 are candidates for destinations 30 that have been visited by straddle type vehicles 3. Here, candidates for destinations that have been visited by straddle type vehicles 3 is a concept including candidates for destinations 30 that have been visited by the user's own straddle type vehicle, and candidates for destinations 30 that have been visited by other user's straddle type vehicles. Also, the second storage 20 is configured to store the motorcycle-type information 42 and points 50 as a bonus for arriving at the destination 30, which will be described later. In the first embodiment, the second storage 20 is configured to store the motorcycle-type information 42 and the points 50 associated with individual users. In other words, the second storage 20 stores the motorcycle-type information 42 and points 50 assigned to each user. Also, the second storage 20 is configured to various programs executed by the second controller 21. The second storage 20 includes a nonvolatile storage, such as an HDD or an SSD, for example. The second storage 20 is an example of a "storage" in the claims.

The second controller 21 is configured to control parts of the server 2. Also, the second controller 21 is configured to select the destination 30 to be displayed on the display 12 from the plurality of destination candidates 31. Also, the second controller 21 is configured to determine whether the user arrives at the destination 30. The second controller 21 includes a CPU, and memory such as a ROM and a RAM.

In the first embodiment, the second controller 21 includes a condition acquirer 21a, a destination selector/transmitter 21b, a destination arrival determiner 21c, and a bonus provider 21d as function blocks. The condition acquirer 21a, the destination selector/transmitter 21b, the destination arrival determiner 21c, and the bonus provider 21d are constructed of software as the functional blocks realized by executing various programs stored in the second storage 20 by the second controller 21. The condition acquirer 21a, the destination selector/transmitter 21b, the destination arrival determiner 21c, and the bonus provider 21d can be constructed of hardware by providing dedicated processors (processing circuits) as hardware parts separated from each other. Functions of the condition acquirer 21a, the destination selector/transmitter 21b, the destination arrival determiner 21c, and the bonus provider 21d will be described later.

The second communicator 22 is configured to wirelessly connect the server 2 and the mobile terminal 1 to each other via the network 90. The second communicator 22 includes a wireless communication module, for example.

The straddle type vehicle 3 includes a third communicator 3a. The third communicator 3a is configured to be able to communicate with the mobile terminal 1. The third communicator 3a is configured to wirelessly connect to the first communicator 14. In the first embodiment, the third communicator 3a is configured to wirelessly connect to the first communicator 14 by using Bluetooth (registered trademark) or Wi-Fi, for example. The third communicator 3a includes a wireless communication module, for example. The third communicator 3a is an example of a "communicator" in the claims.

In the first embodiment, the condition acquirer 21a is configured to acquire the desired conditions 40, which are conditions of the destination 30 desired by the user, and the information on the current location 41 of the user through the mobile terminal 1. In the first embodiment, the condition acquirer 21a is configured to acquire the motorcycle-type information 42 in addition to the desired conditions 40 and the information on the current location 41 through the mobile terminal 1. In the first embodiment, the destination selector/transmitter 21b is configured to transmit the destination 30 selected, to-be-displayed destination candidates 32, which will be described later, and information on surrounding facilities 33 to the mobile terminal 1. The information on surrounding facilities 33 includes parks, shopping facilities, hotels, and the like, for example.

### (Desired Conditions)

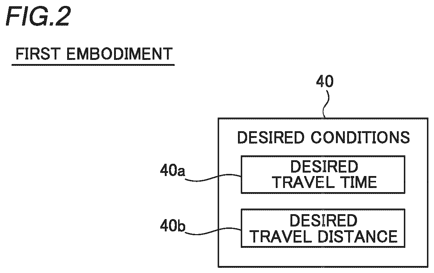

In the first embodiment, as shown in FIG. 2, the desired conditions 40 include one of a desired travel time 40a and a desired travel distance 40b. The desired travel time 40a is a travel time desired by the user of the motorcycle. The desired travel distance 40b is a travel distance desired by the user of the motorcycle. Although the desired conditions 40 are illustrated to include both the desired travel time 40a and the desired travel distance 40b shown in FIG. 2 for convenience, the desired conditions 40 are practically required to include at least one of them.

In the first embodiment, the condition acquirer 21a (see FIG. 1) is configured to acquire one of the desired travel time 40a and the desired travel distance 40b through the mobile terminal 1. Here, to acquire a condition through the mobile terminal 1 means to acquire a condition from the mobile terminal 1 via the network 90 by using the condition acquirer 21a.

### (Desired Travel Time Input Screen)

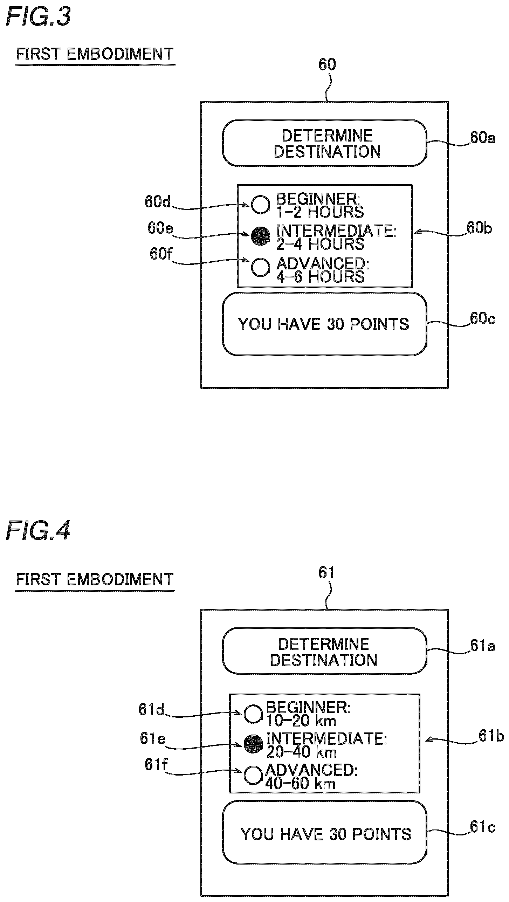

In a case in which the desired conditions 40 (see FIG. 2) include the desired travel time 40a (see FIG. 2), a configuration in which the desired travel time 40a is transmitted from the mobile terminal 1 (see FIG. 1) to the server 2 (see FIG. 1) is now described with reference to FIG. 3.

A desired travel time input screen 60 shown in FIG. 3 is a screen displayed on the display 12 (see FIG. 1) of the mobile terminal 1 (see FIG. 1). The desired travel time input screen 60 displays a destination determination button 60a, a selection field 60b of the desired travel time 40a, and an indication field 60c of the points 50 (see FIG. 1) that the user currently has. The desired travel time input screen 60 is generated in the server 2 and transmitted to the mobile terminal 1 via the network 90 (see FIG. 1). The desired travel time input screen 60 is displayed on the display 12 of the mobile terminal 1.

The destination determination button 60a is a GUI (Graphical User Interface) press button displayed in the desired travel time input screen 60.

The selection field 60b of the desired travel time 40a is a field that displays alternatives when the user selects the desired travel time 40a. In the exemplary screen shown in FIG. 3, a beginner alternative 60d, an intermediate alternative 60e, and an advanced alternative 60f are displayed as the alternatives when the user selects the desired travel time 40a. The beginner alternative 60d is an alternative corresponding to travel time of one to two hours. Also, the intermediate alternative 60e is an alternative corresponding to travel time of two to four hours. Also, the advanced alternative 60f is an alternative corresponding to travel time of four to six hours. In the first embodiment, the beginner alternative 60d, the intermediate alternative 60e, and the advanced alternative 60f are displayed as radio-button type alternatives.

The indication field 60c of the points 50 displays the points 50 that the user currently has. The points 50 are points exchangeable for gifts relating to the motorcycle by the user. The gifts relating to the motorcycle include a motorcycle helmet, a motorcycle jacket, a motorcycle shirt, and the like, for example.

In the first embodiment, if the destination determination button 60a is pressed, the first controller 11 (see FIG. 1) transmits the desired travel time 40a selected in the selection field 60b of the desired travel time 40a to the server 2.

### (Desired Travel Distance Input Screen)

In a case in which the desired conditions 40 (see FIG. 2) include the desired travel distance 40b (see FIG. 2), a configuration in which the desired travel distance 40b is transmitted from the mobile terminal 1 (see FIG. 1) to the server 2 (see FIG. 1) is now described with reference to FIG. 4.

A desired travel distance input screen 61 shown in FIG. 4 is a screen displayed on the display 12 (see FIG. 1) of the mobile terminal 1. The desired travel distance input screen 61 displays a destination determination button 61a, a selection field 61b of the desired travel distance 40b, and an indication field 61c of the points 50 that the user currently has (see FIG. 1). The destination determination button 61a, and the indication field 61c of the points 50 have similar configurations to the destination determination button 60a, and the indication field 60c of the points 50 shown in FIG. 3, and their description is omitted. The desired travel distance input screen 61 is generated in the server 2, and transmitted to the mobile terminal 1 via the network 90. The desired travel distance input screen 61 is displayed on the display 12 of the mobile terminal 1.

The selection field 61b of the desired travel distance 40b is a field that displays alternatives when the user selects the desired travel distance 40b. In the exemplary screen shown in FIG. 3, a beginner alternative 61d, an intermediate alternative 61e, and an advanced alternative 61f are displayed as the alternatives when the user selects the desired travel distance 40b. The beginner alternative 61d is an alternative corresponding to a travel distance of 10 to 20 km. The intermediate alternative 61e is an alternative corresponding to a travel distance of 20 to 40 km. The advanced alternative 61f is an alternative corresponding to a travel distance of 40 to 60 km. In the first embodiment, the beginner alternative 61d, the intermediate alternative 61e, and the advanced alternative 61f are displayed as radio-button type alternatives.

If the destination determination button 61a is pressed, the first controller 11 (see FIG. 1) transmits the desired travel distance 40b selected in the selection field 61b of the desired travel distance 40b to the server 2.

### (Selection of Destination)

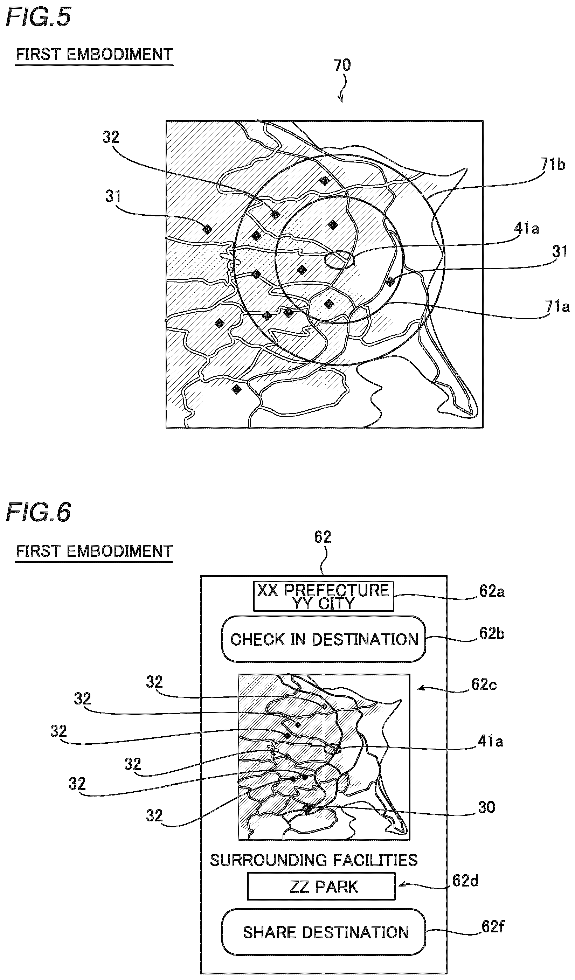

A configuration in which the second controller 21 (see FIG. 1) determines the destination 30 (see FIG. 1) is now described with reference to FIG. 5. A screen 70 shown in FIG. 5 is a screen illustrated to explain the configuration in which the second controller 21 selects the destination 30 for ease of explanation, and is not displayed on the mobile terminal 1 (see FIG. 1).

In the first embodiment, the second controller 21 (destination selector/transmitter 21b (see FIG. 1)) is configured to select two or more to-be-displayed destination candidates 32, which are candidates for the destination 30 (see FIG. 6) to be proposed to the user, from the plurality of destination candidates 31 that are previously stored in the second storage 20 based on the desired conditions 40 (see FIG. 2) and the information on the current location 41 (see FIG. 1). Specifically, the destination selector/transmitter 21b acquires the destination candidates 31 that are located near the current location of the user shown in the screen 70. The destination selector/transmitter 21b acquires the current location of the user based on the information on the current location 41 transmitted from the mobile terminal 1. In the screen 70, the current location of the user is indicated by an ellipse 41a.

Subsequently, the destination selector/transmitter 21b determines the to-be-displayed destination candidates 32, which are candidates to be displayed on the display 12 (see FIG. 1) of the mobile terminal 1, from the plurality of destination candidates 31 based on the desired conditions 40 transmitted from the mobile terminal 1. The to-be-displayed destination candidates 32 are destination candidates that satisfy the desired conditions 40 in the plurality of destination candidates 31.

The destination selector/transmitter 21b is configured to select the destination 30 based on one of the desired travel time 40a (see FIG. 2) and the desired travel distance 40b (see FIG. 2), and the information on the current location 41. Circles 71a and 71b shown in the screen 70 are set based on the desired conditions 40. In a case in which the desired conditions 40 include the desired travel time 40a, each of the circles 71a and 71b is set to a range that can be reached by the user from the current location within the desired travel time 40a.

In the first embodiment, the destination selector/transmitter 21b acquires the range that can be reached by the user within the desired travel time 40a depending on the type of the motorcycle based on the motorcycle-type information 42 (see FIG. 1) acquired by the condition acquirer 21a (see FIG. 1) through the mobile terminal 1. For example, in a case in which the motorcycle is small (e.g., its displacement is not greater than 125 cc), the destination selector/transmitter 21b assumes its average speed as 10 km/h during the user moves by using the motorcycle, and sets the circles 71a and 71b based on the desired travel times 40a and the average speed per hour. For example, in a case in which the motorcycle is small, and the intermediate alternative 60e is selected as the desired travel time 40a, the second controller 21 sets the circle 71a whose distance from the current location is 20 km (2 hours x 10 km/h). In addition, the destination selector/transmitter 21b sets the circle 71b whose distance from the current location is 40 km (4 hours x 10 km/h). Alternatively, in a case in which the motorcycle is large (e.g., its displacement is not smaller than 126 cc), the second controller 21 assumes its average speed as 20 km/h during the user moves by using the motorcycle, and sets the circles 71a and 71b based on the desired travel time 40a and the average speed.

In a case in which the desired conditions 40 include the desired travel distance 40b (see FIG. 2), the destination selector/transmitter 21b sets each of the circles 71a and 71b in accordance with the desired travel distance 40b from the current location. For example, in a case in which the intermediate alternative 61e is selected as the desired travel distance 40b, the destination selector/transmitter 21b sets the circle 71a whose distance from the current location is 20 km. Alternatively, the second controller 21 sets the circle 71b whose distance from the current location is 40 km.

Subsequently, the destination selector/transmitter 21b selects the candidates that are located outside the circle 71a and inside the circle 71b as the to-be-displayed destination candidates 32 from the plurality of destination candidates 31. Subsequently, the destination selector/transmitter 21b randomly selects the destination 30 from the to-be-displayed destination candidates 32 selected. That is, the destination selector/transmitter 21b is configured to select the destination 30 based on the desired conditions 40, the information on the current location 41, and the motorcycle-type information 42 acquired by the condition acquirer 21a through the mobile terminal 1. Any technique can be used to randomly select the destination 30 by using the destination selector/transmitter 21b as long as it can randomly select one destination 30 from the two or more to-be-displayed destination candidates 32.

Also, in the first embodiment, the destination selector/transmitter 21b is configured to transmit the destination 30 selected and the two or more to-be-displayed destination candidates 32 to the mobile terminal 1.

### (Display of Destination)

As shown in a destination display screen 62 of FIG. 6, the mobile terminal 1 (see FIG. 1) is configured to indicate the destination 30 and the two or more to-be-displayed destination candidates 32 transmitted from the second controller 21 (see FIG. 1) on the display 12 (see FIG. 1).

The destination display screen 62 includes an indication field 62a of the destination 30, a check-in button 62b, a map 62c showing the destination 30, an indication field 62d of the information on surrounding facilities 33 (see FIG. 1), and a share button 62f for sharing the destination 30. The destination display screen 62 is generated in the server 2, and transmitted to the mobile terminal 1 via the network 90 (see FIG. 1). Subsequently, the destination display screen 62 is displayed on the display 12 of the mobile terminal 1.

The indication field 62a of the destination 30 indicates location information on the destination 30 randomly selected. Specifically, the indication field 62a of the destination 30 indicates an address of the destination 30 randomly selected.

Also, the check-in button 62b is a GUI press button, and it is determined whether the user arrives at the destination 30 in the server 2 (see FIG. 1) if the check-in button is pressed. Determination processing whether the user arrives at the destination 30 in the server 2 will be described later.

The map 62c indicates the current location of the user, the destination 30 and to-be-displayed destination candidates 32. In the first embodiment, the second controller 21 is configured to discriminatively indicate the destination 30 from the to-be-displayed destination candidates 32 in the map 62c. In the map 62c, the current location of the user is indicated by the ellipse 41a. In the exemplary screen shown in FIG. 6, the second controller 21 is configured to discriminatively indicate the destination 30 from the to-be-displayed destination candidates 32 by indicating the destination 30 and the to-be-displayed destination candidates 32 in different indication forms. Specifically, the second controller 21 discriminatively indicates the destination 30 from the to-be-displayed destination candidates 32 by indicating the destination 30 larger than the to-be-displayed destination candidates 32. The second controller 21 can indicate the destination 30 in any form as long as the destination 30 can be distinguish from the to-be-displayed destination candidates 32. For example, alternatively, the second controller 21 can discriminatively indicate the destination 30 from the to-be-displayed destination candidates 32 by indicating the destination 30 and the to-be-displayed destination candidates 32 in different colors. Also, the second controller 21 can discriminatively indicate the destination 30 from the to-be-displayed destination candidates 32 by superimposing a mark on the destination 30 in the map 62c.

In the indication field 62d, the information on surrounding facilities 33 of the destination 30 is indicated. In the exemplary screen shown in FIG. 6, a name of a park is indicated as the information on surrounding facilities 33.

The share button 62f is a GUI press button. If the share button 62f is pressed by the user, the destination 30 is shared with other users. In the first embodiment, if the share button 62f is pressed, a QR code (registered trademark) including the location information on the destination 30 is created so that the user can share the destination 30 with other users.

### (Determination of Arrival at Destination)

A configuration in which the destination arrival determiner 21c (see FIG. 1) determines whether the user arrives at the destination 30 is now described. If the check-in button 62b is pressed, the mobile terminal 1 transmits information on the destination 30 and the information on the current location 41 of the user (see FIG. 1) to the server 2. The destination arrival determiner 21c determines whether the user arrives at the destination 30 based on the information on the current location 41 of the user, a connection status between the mobile terminal 1 and the third communicator 3a, and the information on the destination 30 transmitted from the mobile terminal 1. Specifically, the destination arrival determiner 21c is configured to determine whether the user arrives at the destination 30 based on the information on the current location 41 transmitted from the mobile terminal 1 and on whether the mobile terminal 1 and the third communicator 3a are communicatively connected to each other. In the first embodiment, the destination arrival determiner 21c determines whether a difference between the current location of the user and the destination 30 falls within a predetermined range. Also, the destination arrival determiner 21c determines whether the mobile terminal 1 and the third communicator 3a are communicatively connected to each other. The destination arrival determiner 21c determines that the user arrives at the destination 30 if the difference between the current location of the user and the destination 30 falls within the predetermined range, and the mobile terminal 1 and the third communicator 3a are communicatively connected to each other. If the distance difference between the current location of the user and the destination 30 is greater than the predetermined range, the destination arrival determiner 21c denies that the user arrives at the destination 30. Even in a case in which the difference between the current location of the user and the destination 30 falls within the predetermined range, if the mobile terminal 1 and the third communicator 3a are not communicatively connected to each other, the destination arrival determiner 21c denies that the user arrives at the destination 30.

### (Point Providing)

In the first embodiment, the bonus provider 21d (see FIG. 1) is configured to provide points 50 as a predetermined bonus to the user if the destination arrival determiner 21c determines that the user arrives at the destination 30. Specifically, if the user arrives at the destination 30, the bonus provider 21d provides the points 50 to the user by storing the points 50 that are associated with the user in the second storage 20.

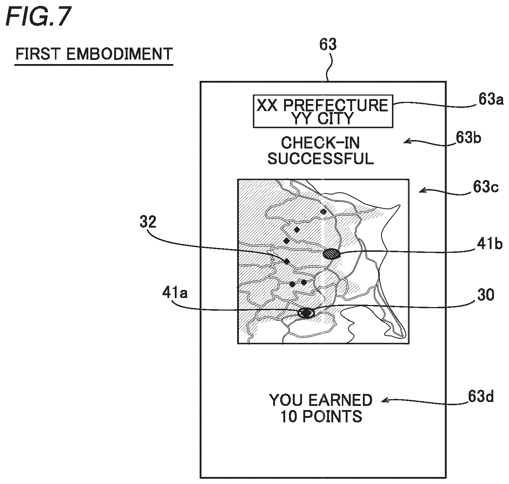

A point-providing screen 63 shown in FIG. 7 is a screen displayed on the display 12 (see FIG. 1) of the mobile terminal 1 (see FIG. 1) when the user is provided with the points 50 (see FIG. 1).

The point-providing screen 63 includes an indication field 63a of the destination 30, a check-in determination result indication field 63b, a map 63c, and a point-earning result indication field 63d. The point-providing screen 63 is generated in the server 2, and transmitted to the mobile terminal 1 via the network 90 (see FIG. 1). Subsequently, the point-providing screen 63 is displayed on the display 12 of the mobile terminal 1.

The indication field 63a of the destination 30 indicates location information on the destination 30 randomly selected. Specifically, the indication field 63a of the destination 30 indicates an address of the destination 30 randomly selected.

A check-in determination result is indicated in the check-in determination result indication field 63b. For example, if the user arrives at the destination 30, a message "Check-In Successful" is indicated in the check-in determination result indication field 63b. Also, for example, if the user does not arrive at the destination 30, a message "Check-In Failed" is indicated in the check-in determination result indication field 63b.

Also, the map 63c indicates the current location of the user (ellipse 41a), a departure point 41b, the destination 30, and the to-be-displayed destination candidates 32.

Also, the points 50 that the user earns is indicated in the point-earning result indication field 63d.

### (Destination Indication Processing)

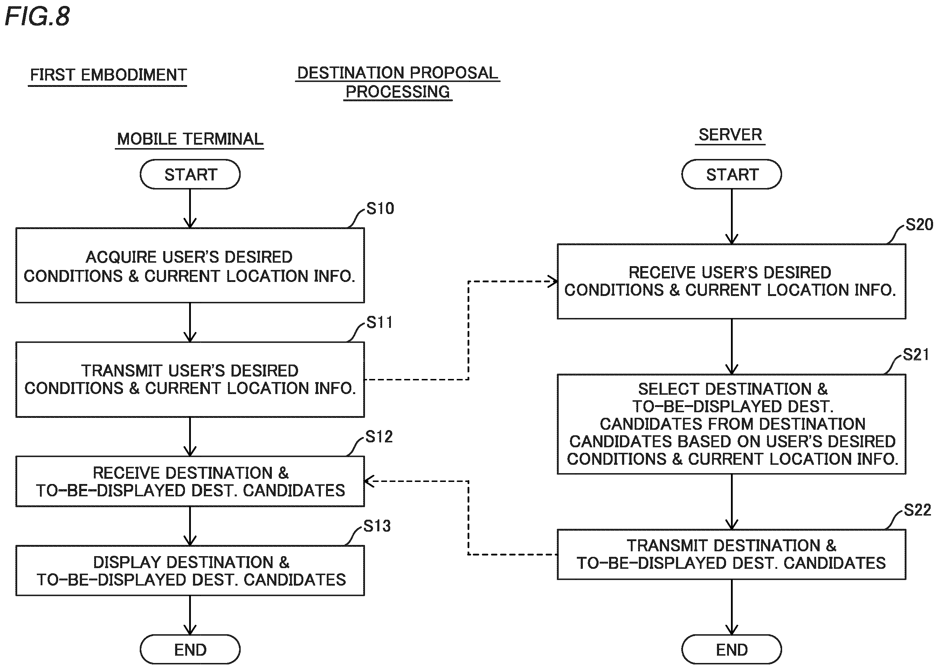

A method for selecting the destination 30 (see FIG. 1) in the destination proposal system 100 (see FIG. 1) is now described with reference to FIG. 8.

In step S10, the mobile terminal 1 (see FIG. 1) acquires user's desired conditions 40 (see FIG. 1) and information on the current location 41 (see FIG. 1). Specifically, the mobile terminal 1 (the first controller 11 (see FIG. 1)) acquires the desired conditions 40 input by the user. Also, the first controller 11 acquires information on a current location of the mobile terminal 1 as the information on the current location 41. Specifically, the first controller 11 acquires the information on the current location of the mobile terminal 1 from GPS (Global Positioning System) satellites. In the first embodiment, the first controller 11 acquires the motorcycle-type information 42, which is information on the type of motorcycle owned by the user.

In step S11, the mobile terminal 1 transmits the desired conditions 40 acquired, and the information on the current location 41 to the server 2 via the network 90. In the first embodiment, in processing of step S11, the mobile terminal 1 transmits one of the desired travel time 40a and the desired travel distance 40b from the mobile terminal 1. In the first embodiment, in processing of step S11, the mobile terminal 1 transmits the desired conditions 40, the information on the current location 41, and the motorcycle-type information 42.

After that, the procedure moves to processing in the server 2. In step S20, the server 2 (condition acquirer 21a (see FIG. 1) acquire the desired conditions 40, which are conditions of the destination 30 desired by the user, and the information on the current location 41 of the user. In the first embodiment, the condition acquirer 21a acquires the desired conditions 40, the information on the current location 41, and the motorcycle-type information 42.

In step S21, the server 2 (destination selector/transmitter 21b (see FIG. 1)) randomly selects a proper destination 30 from a plurality of destination candidates 31 previously stored based on the desired conditions 40 and the information on the current location 41. Specifically, the destination selector/transmitter 21b selects the destination 30 based on one of the desired travel time 40a and the desired travel distance 40b, and the information on the current location 41. More specifically, the destination selector/transmitter 21b selects two or more to-be-displayed destination candidates 32, which are candidates for the destination 30 to be proposed to the user, from the plurality of destination candidates 31 that are previously stored based on the desired conditions 40 and the information on the current location 41. Subsequently, the destination selector/transmitter 21b randomly selects the destination 30 from the to-be-displayed destination candidates 32 selected.

In the first embodiment, because the condition acquirer 21a acquires the motorcycle-type information 42 through the mobile terminal 1, the destination selector/transmitter 21b selects the destination 30 based on the desired conditions 40, the information on the current location 41, and the motorcycle-type information 42 transmitted from the mobile terminal 1 in processing of step S21.

In step S22, the server 2 transmits the destination 30 to the mobile terminal 1 owned by the user via the network 90. In the first embodiment, the server 2 transmits the destination 30 selected, and two or more to-be-displayed destination candidates 32 to the mobile terminal 1. Subsequently, the processing in the server 2 ends.

After that, the procedure moves to processing in the mobile terminal 1. That is, at step S12, the mobile terminal 1 receives the destination 30, and the two or more to-be-displayed destination candidates 32 transmitted.

In step S13, the mobile terminal 1 indicates the destination 30 transmitted. In the first embodiment, the mobile terminal 1 indicates the transmitted destination 30 and the two or more to-be-displayed destination candidates 32. Subsequently, the processing by the mobile terminal 1 is finished.

### (Destination Arrival Determination Processing)

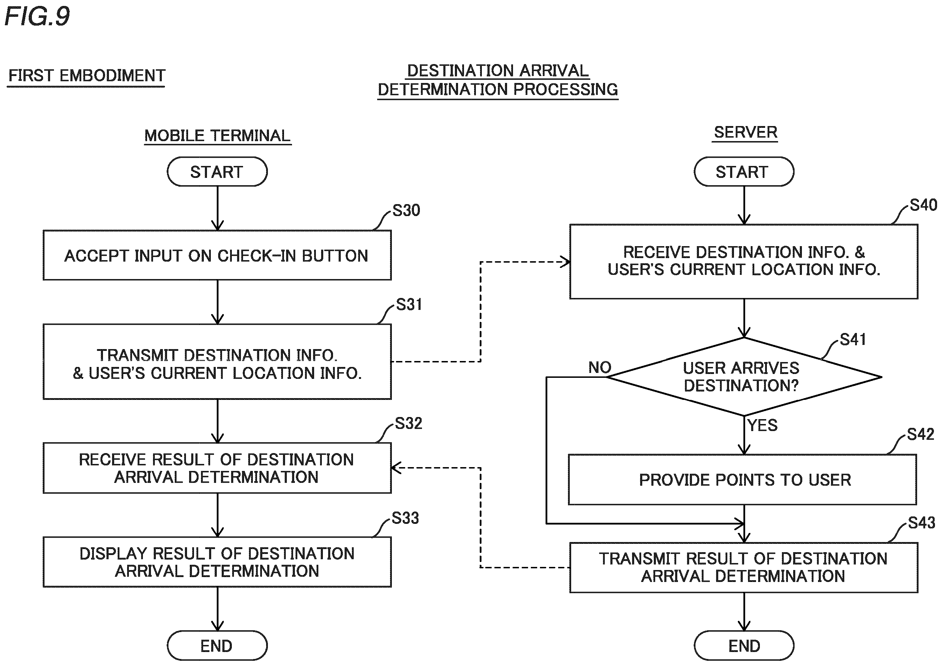

Processing in which the server 2 (see FIG. 1) determines whether the user arrives at the destination 30 (see FIG. 1) is now described with reference to FIG. 9.

In step S30, the mobile terminal 1 accepts an operating input on the check-in button 62b (see FIG. 6).

In step S31, the mobile terminal 1 transmits information on the destination 30 and the information on the current location 41 of the user to the server 2.

After that, the procedure moves to processing in the server 2. That is, in step S40, the server 2 receives the information on the destination 30 and the current location 41 from the mobile terminal 1.

In step S41, the destination arrival determiner 21c (see FIG. 1) determines whether the user arrives at the destination 30. Specifically, the destination arrival determiner 21c is configured to determine whether the user arrives at the destination 30 based on the information on the current location 41 transmitted from the mobile terminal 1 and on whether the mobile terminal 1 and the third communicator 3a are communicatively connected to each other. Specifically, the destination arrival determiner 21c determines that the user arrives at the destination 30 if the difference between the current location of the user and the destination 30 falls within the predetermined range, and the mobile terminal 1 and the third communicator 3a are communicatively connected to each other. If the distance difference between the current location of the user and the destination 30 is greater than the predetermined range, the destination arrival determiner 21c denies that the user arrives at the destination 30. Even in a case in which the difference between the current location of the user and the destination 30 falls within the predetermined range, if the mobile terminal 1 and the third communicator 3a are not communicatively connected to each other, the destination arrival determiner 21c denies that the user arrives at the destination 30. If the user arrives at the destination 30, the procedure goes to step S42. If the user does not arrive at the destination 30, the procedure goes to step S43.

In step S42, the bonus provider 21d (see FIG. 1) provides the points 50 (see FIG. 1)to the user. In other words, if the bonus provider 21d provides the points 50 as the predetermined bonus to the user if the destination arrival determiner 21c determines that the user arrives at the destination 30. In the first embodiment, the bonus provider 21d provides the user with the points 50 exchangeable for a gift relating to the motorcycle by the user. In processing of step S42, the points 50 are stored in the second storage 20 (see FIG. 1) with being assigned to the user by the bonus provider 21d. In a case in which the points 50 that are assigned to the user are already stored in the second storage 20, the bonus provider 21d adds the points 50 that the user newly earns to the points 50 that are already stored in the second storage 20 so that the points updated are stored in the second storage 20.

In step S43, the server 2 (second controller 21 (see FIG. 1)) transmits a result of destination arrival determination to the mobile terminal 1. If the user arrives at the destination 30, the server 2 transmits a message that check-in is successful, and the points that the user earns as the result of destination arrival determination to the mobile terminal 1. If the user does not arrive at the destination 30, the server 2 transmits a message that check-in is failed to the mobile terminal 1. Subsequently, the processing in the server 2 ends.

After that, the procedure moves to processing in the mobile terminal 1. That is, in step S32, the mobile terminal 1 receives the result of destination arrival determination transmitted from the server 2.

In step S33, the mobile terminal 1 indicates the result of the destination arrival determination on the display 12. Subsequently, the processing by the mobile terminal 1 is finished.

### (Destination Candidate Generation Processing)

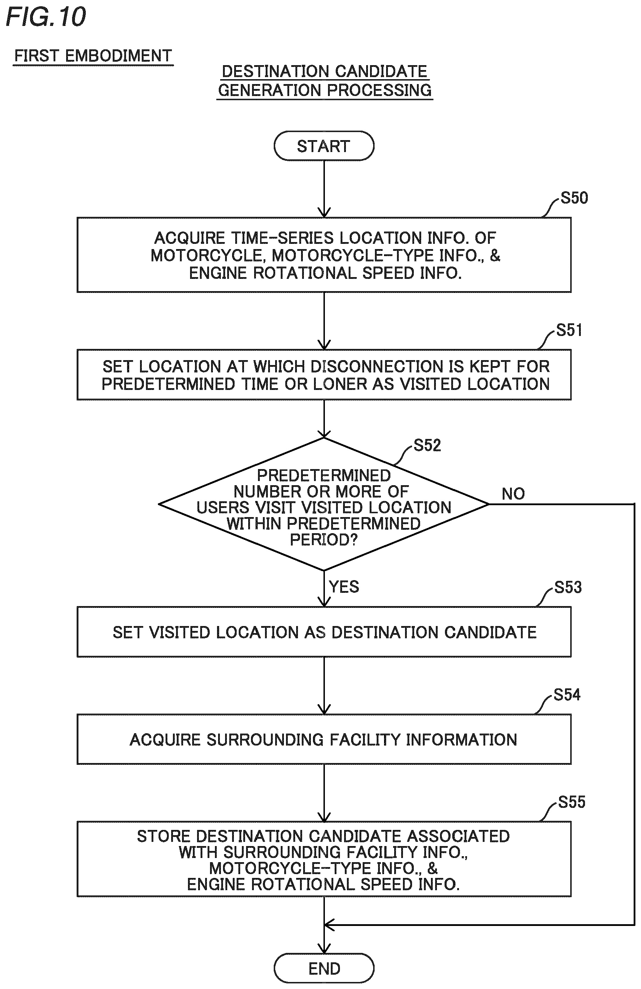

Processing in which the server 2 (see FIG. 1) generates the destination candidate 31 (see FIG. 1) is now described with reference to FIG. 10. The server 2 generates the destination candidate 31 and stores the destination candidate in the second storage 20 (see FIG. 1) in advance of selection of the destination 30 (see FIG. 1) by the user. Specifically, the server 2 acquires the destination candidates 31 by selecting the destination candidates from a plurality of locations that have been visited by a number of motorcycle users.

In step S50, the second controller 21 (see FIG. 1) acquires time-series location information of the motorcycle, the motorcycle-type information 42, and engine rotational speed information from the mobile terminal 1 (see FIG. 1). The motorcycle-type information 42 is required to be acquired only once, and the time-series location information and the engine rotational speed information on the motorcycle are transmitted to the server 2 at a predetermined time such as at a time when the user operates the mobile terminal 1.

In step S51, the second controller 21 sets a location at which the mobile terminal 1 and the motorcycle are disconnected for a predetermined period of time or loner as a location that has been visited by the user. For example, the second controller 21 sets the location at which the mobile terminal 1 and the motorcycle are disconnected for a period of ten minutes or longer as the location that has been visited by the user. In the first embodiment, the motorcycle and the mobile terminal 1 are configured to be able to connect to each other via Bluetooth (registered trademark) so that the second controller 21 sets the location at which Bluetooth connection between the motorcycle and the mobile terminal 1 is disconnected for a period of ten minutes or longer as the location that has been visited by the user (hereinafter referred to as a "set-as-visited location").

In step S52, the second controller 21 determines whether a predetermined number or more of users visit the set-as-visited location within a predetermined time period. For example, the second controller 21 determines whether three or more users have visited the set-as-visited location in the last one year. If three or more users have visited the set-as-visited location in the last one year, the procedure goes to step S53. If three or more users have not visited the set-as-visited location in the last one year, the procedure ends.

In step S53, the second controller 21 sets the set-as-visited location as the destination candidate 31.

In step S54, the second controller 21 acquires information on surrounding facilities 33 of the location that is set as the destination candidate 31 in step S53.

In step S55, the second controller 21 stores the destination candidates 31, which is associated with the information on surrounding facilities 33, the motorcycle-type information 42, and the engine rotational speed information, in the second storage 20. Specifically, the second controller 21 determines an optimal motorcycle type for the destination candidate 31 based on the motorcycle-type information 42 and the engine rotational speed information, and stores the optimal motorcycle type associated with the destination candidate 31 in the second storage 20. In other words, the second controller 21 stores the maximum displacement in motorcycles that arrived at the destination candidate 31 under the maximum engine rotational speed of not greater than 10000 rpm in two hours immediately before the arrival as a displacement that is required to comfortably reach the destination candidate 31 so that the maximum displacement stored is associated with the destination candidate 31. After that, the procedure ends.

Although it has been illustratively described to determine whether three or more users have visited the set-as-visited location in the last one year as criteria of the determination whether the set-as-visited location is set as the destination candidate 31, these criteria are merely illustrative and the present invention is not limited to these criteria. Alternatively, the second controller 21 can be configured to determine a location that has been visited in a time period other than one year by a number of users other than three users, such as in the latest half year by five or more users, as the destination candidate 31. Also, although it has been illustratively described to require that the maximum engine rotational speed is not greater than 10000 rpm in two hours immediately before the arrival to determine a displacement required to comfortably reach the destination candidate 31, this criterion merely illustrative and the present invention is not limited to this criterion. For example, alternatively, the criterion can be the maximum engine rotational speed of not greater than 9000 rpm in one hour immediately before the arrival. Necessary conditions of the displacement for comfortable arrival to the destination candidate 31 can be set to any proper conditions.

### Advantages of First Embodiment

In the first embodiment, the following advantages are obtained.

As described above, the destination proposal system 100 according to the first embodiment is a destination proposal system for proposing a destination 30 of a straddle type vehicle 3 to a user by displaying the destination 30 on a mobile terminal 1 carried by the user, the destination proposal system including a condition acquirer 21a that acquires desired conditions 40, which are conditions of the destination 30 desired by the user, and information on a current location 41 of the user; a destination selector/transmitter 21b that randomly selects a proper destination as the destination 30 to be set as user's destination from a plurality of destination candidates 31 previously stored based on the desired conditions 40 and the information on the current location 41, and transmits the destination 30 selected to the mobile terminal 1; and a destination arrival determiner 21c that determines whether the user arrives at the destination 30 transmitted by the destination selector/transmitter 21b.

According to this configuration, because the mobile terminal 1 can display a destination 30 that is selected from candidates for the destination 30 based on the desired conditions 40 desired by the user of the straddle type vehicle 3 and information on the current location 41 of the user using by the destination selector/transmitter 21b, it is possible to determine the destination 30 satisfying conditions that the user of the straddle type vehicle 3 desires and being suitable for the user who goes to the destination 30 by the straddle type vehicle 3, and to propose the destination to the user of the straddle type vehicle 3. Also, because the destination arrival determiner 21c determines whether the user arrives at the destination 30 transmitted by the destination selector/transmitter, the destination proposal system 100 (second controller 21) can acquire additional information on tendency of user's preferences in destinations 30, and the like based on whether the user of the straddle type vehicle 3 arrives at the destinations 30. Consequently, it is possible to provide the user with added value such as proposal of destinations 30 more suitable for the user of the straddle type vehicle 3, and providing of bonuses to the user depending on whether the user arrives at the destinations 30.

In the first embodiment, as described above, the straddle type vehicle 3 includes a third communicator 3a configured to be able to communicate with the mobile terminal 1; and the destination arrival determiner 21c is configured to determine whether the user arrives at the destination 30 based on the information on the current location 41 transmitted from the mobile terminal 1 and on whether the mobile terminal 1 and the third communicator 3a are communicatively connected to each other. Here, in a case in which the destination arrival determiner 21c determines whether the user arrives at the destination 30 based only on the information on the current location 41 of the user, it is difficult to determine whether the user moved to the destination 30 by using the straddle type vehicle 3. According to the aforementioned configuration, to address this, because it is determined whether the user arrives at the destination 30 based not only on the information on the current location 41 of the user but also on communicative connection between the mobile terminal 1 and the third communicator 3a of the straddle type vehicle 3, it is possible to properly determine whether the user arrives at the destination 30 by using the straddle type vehicle 3.

In the first embodiment, as described above, a bonus provider 21d that provides a predetermined bonus to the user if the destination arrival determiner 21c determines that the user arrives at the destination 30 is further provided. Accordingly, because the user is provided with the predetermined bonus as a bonus for arrival of the destination 30 if the user arrives at the destination 30, it is possible to enhance the user to motivate to go to the destination 30 by using the straddle type vehicle 3. Consequently, it is possible to provide a destination proposal system 100 attractive to the user as compared with a case in which the user is not provided with the predetermined bonus even if the user arrives at the destination 30.

In the first embodiment, as described above, the straddle type vehicle 3 includes a motorcycle; and the bonus provider 21d is configured to provide the user with points 50 as the predetermined bonus exchangeable for a gift relating to the motorcycle by the user if the user arrives at the destination 30. Accordingly, because the user can change the provided points 50 to the gift relating to the motorcycle, it is possible to further enhance the user to motivate to go to the destination 30 by using the motorcycle. Consequently, it is possible to provide a destination proposal system 100 more attractive to the user.

In the first embodiment, as described above, the destination selector/transmitter 21b is configured to select two or more to-be-displayed destination candidates 32, which are candidates for the destination 30 to be proposed to the user, from the plurality of destination candidates 31 previously stored based on the desired conditions 40 and the information on the current location 41, to randomly select the destination 30 from the two or more to-be-displayed destination candidates 32, and to transmit the destination 30 selected and the two or more to-be-displayed destination candidates 32 selected to the mobile terminal 1. Here, the user may go to the destination 30 that is randomly selected and then to another destination 30. According to the configuration, to address this, because the destination 30 that is randomly selected, and two or more to-be-displayed destination candidates 32 are transmitted to the mobile terminal 1 so that the two or more to-be-displayed destination candidates 32 are displayed together with the destination 30 that is randomly selected, after moving to one of the destination 30 and the to-be-displayed destination candidates 32 displayed the user of the motorcycle can select another destination 30 suitable for user's convenience if desiring to move to another destination 30. As a result, because the user can select, from the destination 30 that is randomly selected and the two or more to-be-displayed destination candidates 32, one destination 30 suitable for user's convenience by himself or herself, it is possible to improve usability of the user of the motorcycle.

In the first embodiment, as described above, the desired conditions 40 include one of a desired travel time 40a, which is a travel time desired by the user of the motorcycle, and a desired travel distance 40b, which is a travel distance desired by the user of the motorcycle; the condition acquirer 21a is configured to acquire the one of the desired travel time 40a and the desired travel distance 40b through the mobile terminal 1; and the destination selector/transmitter 21b is configured to select the destination 30 based on the one of the desired travel time 40a and the desired travel distance 40b, and the information on the current location 41. Accordingly, the user of the motorcycle can easily select a destination 30 suitable for motorcycle user's desire based on the travel time or the travel distance by selecting the desired travel time 40a or the desired travel distance 40b.

In the first embodiment, as described above, the condition acquirer 21a is configured to acquire the desired conditions 40, the information on the current location 41, and motorcycle-type information 42, which is information on a type of the motorcycle owned by the user, through the mobile terminal 1; and the destination selector/transmitter 21b is configured to select the destination 30 based on the desired conditions 40, the information on the current location 41, and the motorcycle-type information 42 acquired by the condition acquirer 21a through the mobile terminal 1. Here, in a case in which the type of the motorcycle owned by the user is a small type, it will often be difficult for the user to comfortably ride the motorcycle if an altitude difference between the destination 30 and the current location is large. Contrary to this, in a case in which the type of the motorcycle owned by the user is a large type, it will often be difficult for the user to ride the motorcycle if roads between the destination 30 and the current location include a narrow road. According to the configuration in which the destination 30 is selected based on the desired conditions 40, the information on the current location 41 and the motorcycle-type information 42 to address this, because a destination 30 suitable for the type of the motorcycle owned by the user (whether the motorcycle is a small or large type) in addition to the desired conditions 40 and the information on the current location 41, it is possible to show, to the user, a destination 30 at which the user can comfortably arrive by using the motorcycle owned by the user. Consequently, it is possible to provide a destination proposal system 100 further more attractive to the user who likes motorcycle riding.

As described above, the server 2 for a destination proposal system for a straddle type vehicle 3 according to the first embodiment is a server 2 for a destination proposal system for proposing a destination 30 of a straddle type vehicle 3 to a user by displaying the destination 30 on a mobile terminal 1 carried by the user, the server including a second storage 20 that previously stores a plurality of destination candidates 31, which are candidates for the destination 30; a condition acquirer 21a that acquires desired conditions 40, which are conditions of the destination 30 desired by the user, and information on a current location 41 of the user; a destination selector/transmitter 21b that randomly selects a proper destination as the destination 30 to be set as user's destination from a plurality of destination candidates 31 previously stored in the second storage 20 based on the desired conditions 40 and the information on the current location 41, and transmits the destination 30 selected to the mobile terminal 1; and a destination arrival determiner 21c that determines whether the user arrives at the destination 30 transmitted by the destination selector/transmitter 21b.

Accordingly, it is possible to provide a server 2 for a destination proposal system for proposing a destination of a straddle type vehicle 3 capable of determining and proposing a destination 30 satisfying conditions that a user of a straddle type vehicle 3 desires and being suitable for the user who goes to the destination 30 by the straddle type vehicle 3 similar to the aforementioned destination proposal system 100. Also, as discussed above, the destination arrival determiner 21c determines whether the user arrives at the destination 30. Consequently, it is possible to provide a server 2 for a destination proposal system for proposing a destination of a straddle type vehicle 3 capable of providing the user with added value such as proposal of destinations 30 more suitable for the user of the straddle type vehicle 3, and providing of bonuses to the user depending on whether the user arrives at the destinations 30 similar to the aforementioned destination proposal system 100.

As described above, the destination proposal method according to the first embodiment is a destination proposal method for proposing a destination 30 of a straddle type vehicle 3 to a user by displaying the destination 30 on a mobile terminal 1 carried by the user, the destination proposal method including acquiring desired conditions 40, which are conditions of the destination 30 desired by the user, and information on a current location 41 of the user; randomly selecting a proper destination as the destination 30 to be set as user's destination from a plurality of destination candidates 31 previously stored based on the desired conditions 40 and the information on the current location 41; transmitting the destination 30 selected to the mobile terminal 1; displaying the destination 30 transmitted on the mobile terminal 1; and determining whether the user arrives at the destination 30.

Accordingly, it is possible to provide a destination proposal method capable of determining and proposing a destination 30 satisfying conditions that a user of a straddle type vehicle 3 desires and being suitable for the user who goes to the destination 30 by the straddle type vehicle 3 similar to the aforementioned destination proposal system 100. Also, in the destination proposal method according to the first embodiment, as discussed above, determining whether the user arrives at the destination 30 is provided. Consequently, it is possible to provide a destination proposal method capable of providing the user with added value such as proposal of destinations 30 more suitable for the user of the straddle type vehicle 3, and providing of bonuses to the user depending on whether the user arrives at the destinations 30 similar to the aforementioned destination proposal system 100.

In the first embodiment, as described above, the straddle type vehicle 3 includes a third communicator 3a configured to be able to communicate with the mobile terminal 1; and it is determined whether the user arrives at the destination 30 based on the information on the current location 41 transmitted from the mobile terminal 1 and on whether the mobile terminal 1 and the third communicator 3a are communicatively connected to each other in the determining whether the user arrives at the destination 30. Accordingly, it is possible to provide a destination proposal method capable of properly determining whether the user arrives at the destination 30 by using the straddle type vehicle 3 similar to the aforementioned destination proposal system 100.

In the first embodiment, as described above, providing a predetermined bonus to the user if the user arrives at the destination 30 is further provided. Accordingly, it is possible to provide a destination proposal method attractive to the user as compared with a case in which the user is not provided with the predetermined bonus even if the user arrives at the destination 30 similar to the aforementioned destination proposal system 100.

In the first embodiment, as described above, the straddle type vehicle 3 includes a motorcycle; and the user is provided with points 50 as the predetermined bonus exchangeable for a gift relating to the motorcycle by the user in the providing the predetermined bonus to the user if the user arrives at the destination 30. Accordingly, because the user is provided with the points 50 exchangeable for a gift relating to the motorcycle, it is possible to further enhance the user to motivate to go to the destination 30 by using the motorcycle, and as a result it is possible to provide a destination proposal method more attractive to the user similar to the aforementioned destination proposal system 100.

In the first embodiment, as described above, the randomly selecting a proper destination as the destination 30 includes selecting two or more to-be-displayed destination candidates 32, which are candidates for the destination 30 to be proposed to the user, from the plurality of destination candidates 31 previously stored based on the desired conditions 40 and the information on the current location 41, and_{;} randomly selecting the destination 30 from two or more to-be-displayed destination candidates 32 selected; the destination 30 selected and the two or more to-be-displayed destination candidates 32 are transmitted to the mobile terminal 1 in the transmitting the destination 30 selected to the mobile terminal 1; and the destination 30 and the two or more to-be-displayed destination candidates 32 transmitted are displayed in the displaying the destination 30 transmitted on the mobile terminal 1. Accordingly, because the user can select, from the destination 30 that is randomly selected and the two or more to-be-displayed destination candidates 32, one destination 30 suitable for user's convenience by himself or herself, it is possible to provide a destination proposal method capable of improving usability of the user of the motorcycle similar to the aforementioned destination proposal system 100.

In the first embodiment, as described above, the desired conditions 40 include one of a desired travel time 40a, which is a travel time desired by the user of the motorcycle, and a desired travel distance 40b, which is a travel distance desired by the user of the motorcycle; transmitting the one of the desired travel time 40a and the desired travel distance 40b through the mobile terminal 1 is further provided; and the destination 30 is selected based on the one of the desired travel time 40a and the desired travel distance 40b transmitted from the mobile terminal 1, and the information on the current location 41 in the randomly selecting the proper destination as the destination 30. Accordingly, it is possible to provide a destination proposal method allowing the user of the motorcycle to easily select a destination 30 suitable for motorcycle user's desire based on the travel time or the travel distance similar to the aforementioned destination proposal system 100.

In the first embodiment, as described above, the desired conditions 40, the information on the current location 41, and motorcycle-type information 42, which is information on a type of the motorcycle owned by the user, are transmitted from the mobile terminal 1 in the transmitting the one of the desired travel time 40a and the desired travel distance 40b from the mobile terminal 1; and the destination 30 is selected based on the desired conditions 40, the information on the current location 41, and the motorcycle-type information 42 transmitted from the mobile terminal 1 in the randomly selecting the proper destination as the destination 30. Accordingly, it is possible to provide a destination proposal method further more attractive to the user who likes motorcycle riding similar to the aforementioned destination proposal system 100.

### Second Embodiment

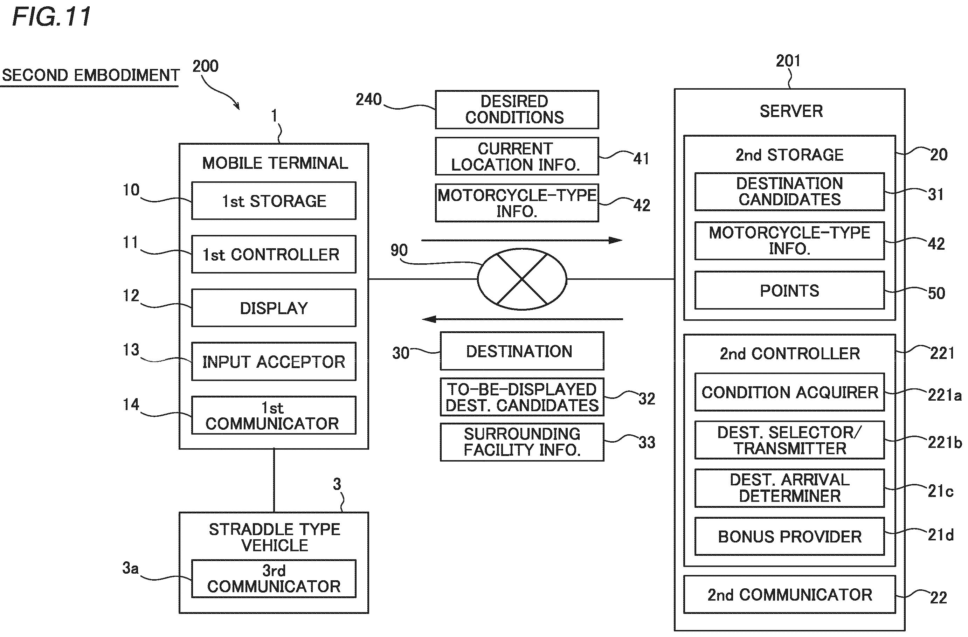

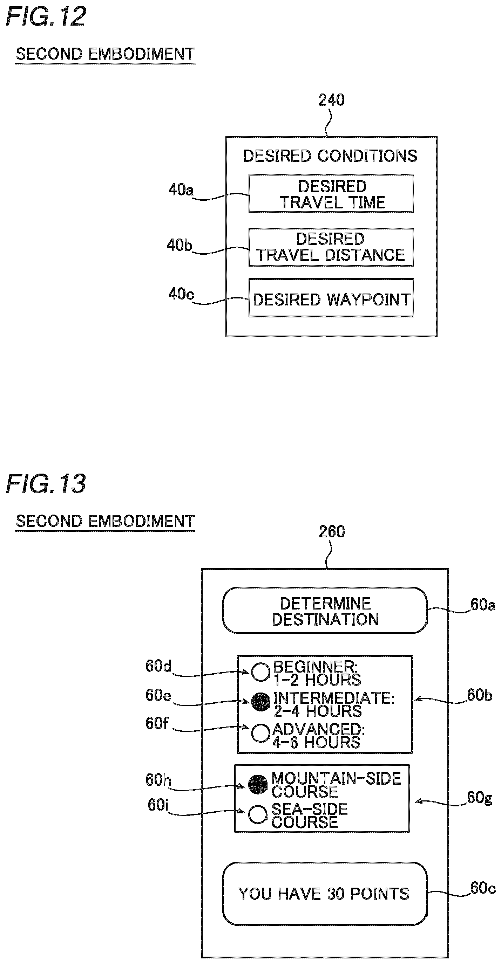

The following description describes a configuration of a destination selection system 200 (see FIG. 11) according to a second embodiment with reference to FIGS. 11 to 15. In the second embodiment, dissimilar to the first embodiment, the destination selection system 200 randomly selects a destination 30 based on desired conditions 240 (see FIG. 11) including a desired travel time 40a (see FIG. 12) or a desired travel distance 40b (see FIG. 12), and a desired waypoint 40c (see FIG. 12). Description of the same configurations in the second embodiment as those of the first embodiment is omitted.

### (Destination Selection System)

As shown in FIG. 11, the destination selection system 200 according to the second embodiment is different from the aforementioned destination proposal system 100 (see FIG. 1) according to the first embodiment from the viewpoint that the destination selection system 200 includes a server 201 instead of the server 2 (see FIG. 1).

The server 201 is different from the server 2 in the first embodiment from the viewpoint that the server 201 includes a second controller 221 instead of the second controller 21 (see FIG. 1). The second controller 221 is different from the second controller 21 in the first embodiment from the viewpoint that the second controller 221 includes a condition acquirer 221a instead of the condition acquirer 21a and a destination selector/transmitter 221b instead of the destination selector/transmitter 21b.

The condition acquirer 221a is configured to acquire the desired conditions 240 through a mobile terminal 1. The destination selector/transmitter 221b is configured to select the destination 30 of a route passing through a waypoint suitable for motorcycle riding based on the desired conditions 240, the motorcycle-type information 42, and the information on the current location 41 acquired by the condition acquirer 221a through the mobile terminal 1.

As shown in FIG. 12, the desired conditions 240 in the second embodiment include the desired waypoint 40c, which is a desired waypoint desired by the user of the motorcycle. The desired waypoint 40c includes a waypoint on a mountain-side winding road, a road near the sea, or the like, for example. That is, the condition acquirer 221a (see FIG. 11) is configured to acquire one of the desired travel time 40a and the desired travel distance 40b, and the desired waypoint 40c through the mobile terminal 1. The destination selector/transmitter 221b (see FIG. 11) is configured to select the destination 30 (see FIG. 11) based on the one of the desired travel time 40a and the desired travel distance 40b, the desired waypoint 40c, the motorcycle-type information 42 (see FIG. 11), and the information on the current location 41 (see FIG. 11). A configuration in which the destination selector/transmitter 221b selects the destination 30 based on the one of the desired travel time 40a and the desired travel distance 40b, the desired waypoint 40c, the motorcycle-type information 42, and the information on the current location 41 will be described later.

### (Desired Waypoint Input Screen)

The desired waypoint input screen 260 shown in FIG. 13 is a screen displayed on the display 12 (see FIG. 11) of the mobile terminal 1 (see FIG. 11). The desired waypoint input screen 260 displays a destination determination button 60a, a selection field 60b of the desired travel time 40a (see FIG. 12), a selection field 60g of the desired waypoint 40c (see FIG. 12), and an indication field 60c of the points 50 (see FIG. 11) that the user currently has. The destination determination button 60a, the selection field 60b of the desired travel time 40a, and the indication field 60c of the points 50 that the user currently has have similar configurations to the destination determination button 60a, the selection field 60b of the desired travel time 40a, and the indication field 60c of the points 50 that the user currently has in the first embodiment shown in FIG. 3, and their description is omitted.

In the example shown in FIG. 13, a mountain-side course alternative 60h, and a sea-side course alternative 60i are displayed as the alternatives of selecting the desired waypoint 40c in the selection field 60g of the desired waypoint 40c. In the second embodiment, the mountain-side course alternative 60h, and the sea-side course alternative 60i are displayed as radio-button type alternatives. The desired waypoint input screen 260 is generated in the server 201 (see FIG. 11), and transmitted to the mobile terminal 1 via the network 90 (see FIG. 11). The desired waypoint input screen 260 is displayed on the display 12 of the mobile terminal 1.

In the second embodiment, if the destination determination button 60a is pressed, the first controller 11 (see FIG. 11) transmits the desired travel time 40a selected in the selection field 60b of the desired travel time 40a, and the desired waypoint 40c selected in the selection field 60g of the desired waypoint 40c to the server 201.

In a case in which the desired conditions 240 include the desired travel distance 40b, the display 12 displays a screen (not shown) that adds the selection field 60g of the desired waypoint 40c to the desired travel distance input screen 61 shown in FIG. 4. Also, if the destination determination button 60a is pressed, the first controller 11 (see FIG. 11) transmits the desired travel distance 40b selected in the selection field 61b of the desired travel distance 40b, and the desired waypoint 40c selected in the selection field 60g of the desired waypoint 40c to the server 201. That is, the mobile terminal 1 in the second embodiment is configured to transmit one of the desired travel time 40a and the desired travel distance 40b, and the desired waypoint 40c to the server 201.

### (Selection of Destination)

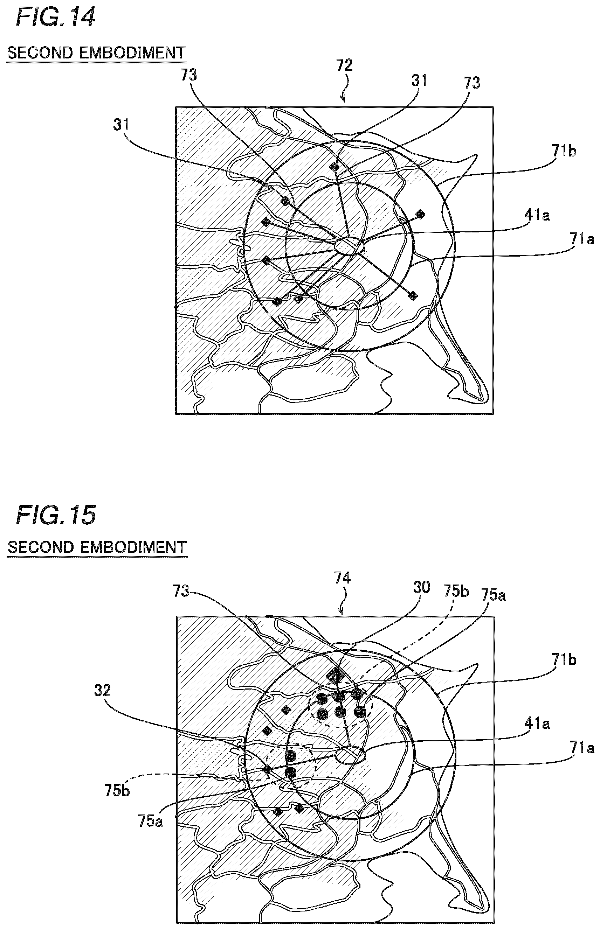

A configuration in which the second controller 221 (see FIG. 11) selects the destination 30 (see FIG. 11) based on the desired conditions 240 (see FIG. 12) including the desired waypoint 40c (see FIG. 12) is now described with reference to FIGS. 14 and 15. Screens 72 and 74 shown in FIGS. 14 and 15 are screens illustrated to explain the configuration in which the second controller 221 selects the destination 30, and are not displayed on the mobile terminal 1 (see FIG. 11).

The destination selector/transmitter 221b (see FIG. 11) sets circles 71a and 71b based on the desired travel time 40a or the desired travel distance 40b as shown in the screen 72 of FIG. 14. The configuration in which the destination selector/transmitter 221b sets the circle 71a and circle 71b is similar to the configuration in which the destination selector/transmitter 21b sets the circle 71a and circle 71b in the first embodiment, and its description is omitted.

The destination selector/transmitter 221b connects the current location indicated by an ellipse 41a to the destination candidates 31 that are located outside the circle 71a and inside the circle 71b in the plurality of destination candidates 31 by straight lines 73.

Subsequently, the destination selector/transmitter 21b (see FIG. 11) determines whether a waypoint that satisfies conditions of the desired waypoint 40c is located on the straight line 73 connecting the destination candidate 31 to the current location as shown in FIG. 15.

Specifically, the destination selector/transmitter 221b determines whether waypoints that satisfy predetermined altitude conditions are included on the straight lines 73. For example, in a case in which the desired waypoint 40c is the mountain-side course alternative, the destination selector/transmitter 221b determines whether waypoints that satisfy the conditions of the desired waypoint 40c are included on the straight lines 73 based on whether any point with an altitude not smaller than 1000 m is included on each straight line. Alternatively, the destination selector/transmitter 221b can determine whether waypoints that satisfy the conditions of the desired waypoint 40c are included on the straight lines 73 based on whether any point with an absolute altitude difference not smaller than 500 m is included on each straight line.

In the screen 74 of FIG. 15, all points 75a have altitudes greater than 1000 m. Areas 75b including the points 75a are located on the straight lines 73 between the current location and the destination candidates 31. Accordingly, the destination selector/transmitter 21b determines the areas 75b including the points 75a as waypoints that satisfy the conditions of the desired waypoint 40c. Also, the destination selector/transmitter 221b determines the destination candidates 31 that include the areas 75 on their straight lines 73 as to-be-displayed destination candidates 32.

Subsequently, the destination selector/transmitter 221b (see FIG. 11) randomly selects the destination 30 from the to-be-displayed destination candidates 32. Subsequently, the server 201 transmits the destination 30 selected, and the to-be-displayed destination candidates 32 to the mobile terminal 1 similar to the first embodiment. Also, the mobile terminal 1 displays the destination 30 and the to-be-displayed destination candidates 32 received on the display 12. The destination selector/transmitter 221b excludes the destination candidates 31 that do not satisfy the conditions of the desired waypoint 40c from the to-be-displayed destination candidates 32. In other words, the destination candidates 31 that do not satisfy the conditions of the desired waypoint 40c are not displayed on the display 12 even if they satisfy the conditions of the desired travel time 40a or the desired travel distance 40b.

In a case in which the sea-side course alternative is selected as the desired waypoint 40c, the destination selector/transmitter 221b determines whether waypoints satisfy the conditions of the desired waypoint 40c based on whether any point with an altitude not greater than 0 m is included on the straight line 73 as the altitude conditions. Alternatively, the destination selector/transmitter 221b can determine whether waypoints satisfy the conditions of the desired waypoint 40c based on whether any point with an altitude not greater than 0 m is located within a predetermine range of distance from the straight line 73.

### (Destination Indication Processing)

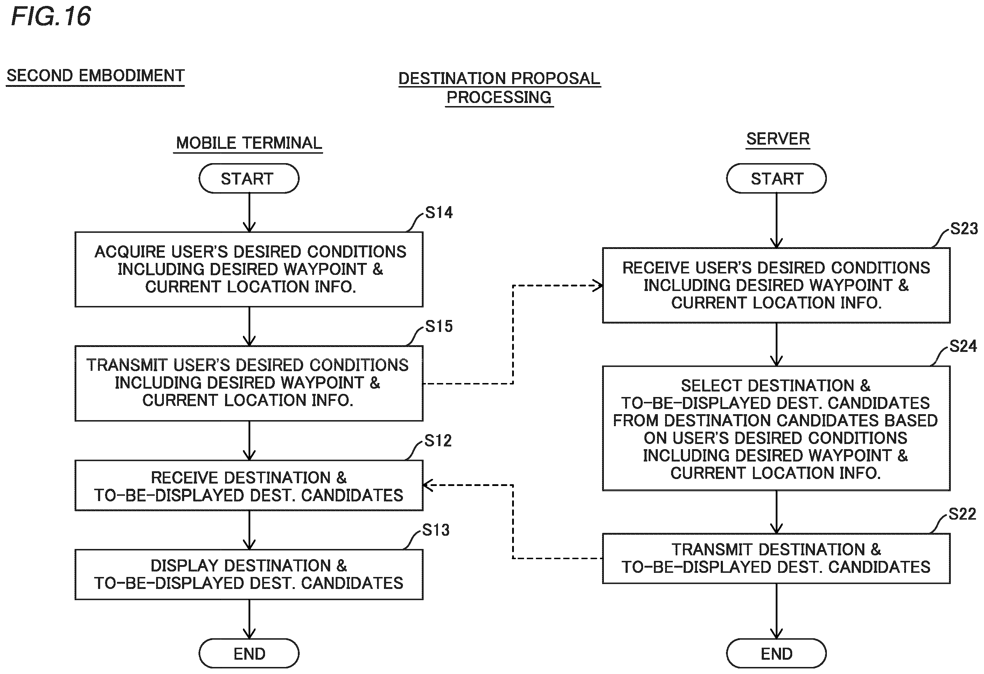

Processing in which the server 201 (see FIG. 11) according to the second embodiment selects the destination 30 (see FIG. 11), and displays the destination on the display 12 (see FIG. 11) of the mobile terminal 1 (see FIG. 11) is now described with reference to FIG. 16. The same processes as those of the server 2 (see FIG. 1) according to the first embodiment for selecting the destination 30 and displaying the destination selected on the display 12 are denoted by the same reference numerals, and their description is omitted.

In step S14, the mobile terminal 1 acquires the desired conditions 240 (see FIG. 12) including the desired waypoint 40c (see FIG. 12), and the information on the current location 41 of the user. In the second embodiment, the mobile terminal 1 acquires the motorcycle-type information 42 (see FIG. 11).

In step S15, the mobile terminal 1 transmits the desired conditions 240 including the desired waypoint 40c, and the information on the current location 41 of the user to the server 201 via the network 90 (see FIG. 11). In the second embodiment, the mobile terminal 1 transmits the motorcycle-type information 42 in addition to the desired conditions 240 and the information on the current location 41 of the user to the server 201.

After that, the procedure moves to processing in the server 201. In step S23, the server 201 (condition acquirer 221a (see FIG. 11)) receives the desired conditions 240. Specifically, the condition acquirer 221a acquires the desired conditions 240 including the desired waypoint 40c and the information on the current location 41 of the user through the mobile terminal 1. In the second embodiment, the condition acquirer 221a acquires the motorcycle-type information 42 in addition to the desired conditions 340 and the information on the current location 41 of the user through the mobile terminal 1.

In step S24, the server 201 (destination selector/transmitter 221b (see FIG. 11)) selects the destination 30 and the to-be-displayed destination candidates 32 from a plurality of destination candidates 31 based on the desired conditions 240 including the desired waypoint 40c, and the information on the current location 41 of the user as shown in FIGS. 14 and 15. In the second embodiment, the destination selector/transmitter 221b selects the destination 30 and the to-be-displayed destination candidates 32 from a plurality of destination candidates 31 based on the motorcycle-type information 42 in addition to the desired conditions 240 including the desired waypoint 40c, and the information on the current location 41 of the user.

In step S22, the server 201 transmits the destination 30 selected, and the to-be-displayed destination candidates 32 to the mobile terminal 1. Subsequently, the processing in the server 201 ends.

After that, the procedure moves to processing in the mobile terminal 1. That is, in steps S12 and S13, the mobile terminal 1 receives the destination 30 and the plurality of destination candidates 31 transmitted. Subsequently, the mobile terminal 1 displays the destination 30 and two or more to-be-displayed destination candidates 32 received on the display 12. Subsequently, the processing by the mobile terminal 1 is finished.

The other configurations of the second embodiment are similar to the first embodiment.

### Advantages of Second Embodiment

In the second embodiment, the following advantages are obtained.

In the second embodiment, as described above, the destination selector/transmitter 221b is configured to select the destination 30 of a route passing through a waypoint suitable for motorcycle riding based on the desired conditions 240, the motorcycle-type information 42, and the information on the current location 41 acquired by the condition acquirer 221a through the mobile terminal 1. Accordingly, because a destination 30 of a route that is suitable for the type of the motorcycle owned by the user (whether the motorcycle is a small or large type) and passing through a waypoint suitable for comfortable motorcycle riding, it is possible to provide a destination selection system 200 capable of further improving satisfaction to the users who likes motorcycling.

In the second embodiment, as described above, the desired conditions 240 further include a desired waypoint 40c, which is the waypoint desired by the user of the motorcycle; the condition acquirer 221a is configured to acquire the one of the desired travel time 40a and the desired travel distance 40b, and the desired waypoint 40c through the mobile terminal 1; and the destination selector/transmitter 221b is configured to select the destination 30 based on the one of the desired travel time 40a and the desired travel distance 40b, the desired waypoint 40c, the motorcycle-type information 42, and the information on the current location 41. Here, there are needs for mountain-side winding road riding or for riding on a road near the sea depending on motorcycle users. According to the aforementioned configuration in which a destination 30 is selected based on the desired conditions 40 including the desired waypoint 40c, which is the waypoint desired by the user, to address this, the user can select the destination 30 of a route passing through the waypoint in accordance with user's need. Consequently, it is possible to provide a destination selection system 200 capable of improving satisfaction to the user.

The other advantages of the second embodiment are similar to the advantages of the aforementioned first embodiment.

### Third Embodiment

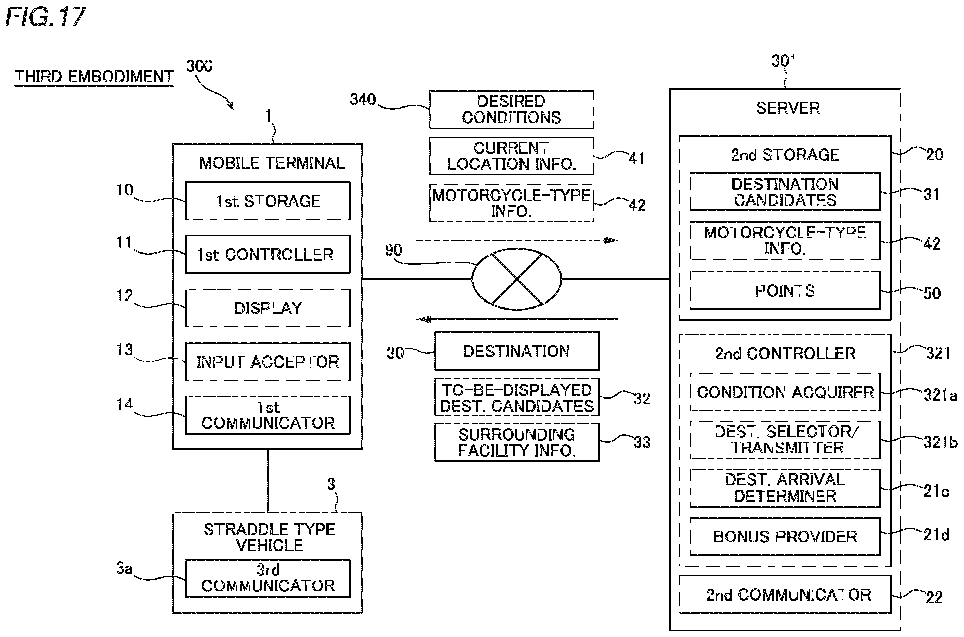

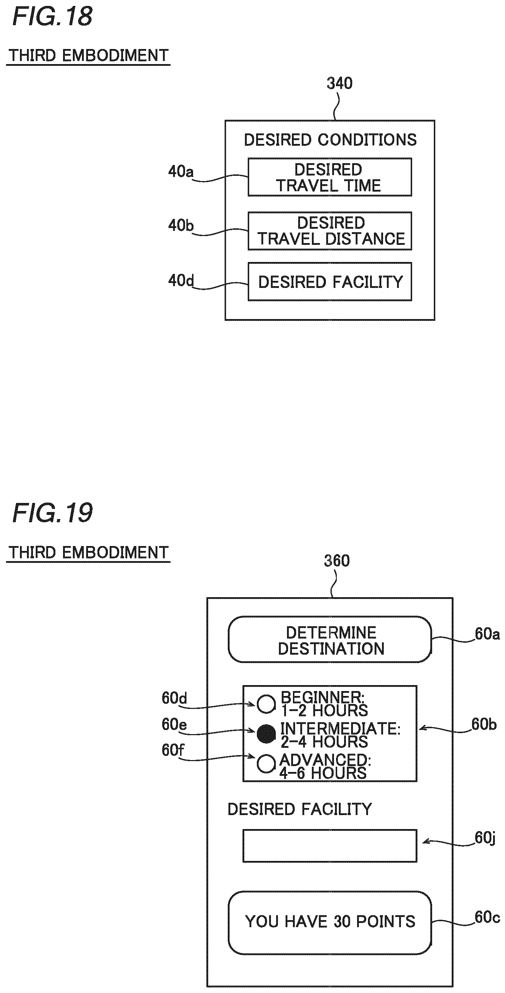

The following description describes a configuration of a destination selection system 300 (see FIG. 17) according to a third embodiment with reference to FIGS. 17 to 21. In the third embodiment, dissimilar to the first embodiment, a destination 30 is selected based on desired conditions 340 (see FIG. 17) including a desired travel time 40a (see FIG. 18) or a desired travel distance 40b (see FIG. 18), and a desired facility 40d (see FIG. 18). Description of the same configurations in the third embodiment as those of the first embodiment is omitted.

### (Destination Selection System)

As shown in FIG. 17, the destination selection system 300 according to the third embodiment is different from the aforementioned destination proposal system 100 (see FIG. 1) according to the first embodiment from the viewpoint that the destination selection system 200 includes a server 301 instead of the server 2 (see FIG. 1).

The server 301 is different from the server 2 in the first embodiment from the viewpoint that the server 301 includes a second controller 321 instead of the second controller 21 (see FIG. 1). The second controller 321 is different from the second controller 21 in the first embodiment from the viewpoint that the second controller 321 includes a condition acquirer 321a instead of the condition acquirer 21a and a destination selector/transmitter 321b instead of the destination selector/transmitter 21b.

The condition acquirer 321a is configured to acquire the desired conditions 340 through a mobile terminal 1. The destination selector/transmitter 321b is configured to select the destination 30 of a route passing through a facility that is desired by a user of a motorcycle based on the desired conditions 340, information on a motorcycle type 42, and information on a current location 41 acquired by the condition acquirer 321a through the mobile terminal 1.

As shown in FIG. 18, the desired conditions 340 in the third embodiment include the desired facility 40d, which is a desired facility desired by the user of the motorcycle. The desired facility 40d is a facility that the user desires to visit on the way to the destination 30, such as a park, a facility from which the user can see a countryside view, a facility from which the user can see a historic view, or a roadside rest stop. That is, the condition acquirer 321a (see FIG. 17) is configured to acquire one of the desired travel time 40a and the desired travel distance 40b, and the desired facility 40d through the mobile terminal 1. The destination selector/transmitter 321b (see FIG. 17) is configured to select the destination 30 (see FIG. 17) based on the one of the desired travel time 40a and the desired travel distance 40b, the desired facility 40d, the motorcycle-type information 42 (see FIG. 17), and the information on the current location 41 (see FIG. 17). A configuration in which the destination selector/transmitter 321b selects the destination 30 based on the one of the desired travel time 40a and the desired travel distance 40b, the desired facility 40d, the motorcycle-type information 42, and the information on the current location 41 will be described later.

### (Desired Facility Input Screen)

The desired facility input screen 360 shown in FIG. 19 is a screen displayed on the display 12 (see FIG. 17) of the mobile terminal 1 (see FIG. 17). The desired facility input screen 360 displays a destination determination button 60a, a selection field 60b of the desired travel time 40a (see FIG. 18), an input field 60j of the desired facility 40d, and an indication field 60c of the points 50 (see FIG. 17) that the user currently has. The destination determination button 60a, the selection field 60b of the desired travel time 40a, and the indication field 60c of the points 50 that the user currently has have similar configurations to the destination determination button 60a, the selection field 60b of the desired travel time 40a, and the indication field 60c of the points 50 that the user currently has in the first embodiment shown in FIG. 3, and their description is omitted. The desired facility input screen 360 is generated in the server 301 and transmitted to the mobile terminal 1 via the network 90 (see FIG. 17). The desired facility input screen 360 is displayed on the display 12 of the mobile terminal 1.

In the exemplary screen shown in FIG. 19, a text input field is shown as the input field 60j of the desired facility 40d. In the third embodiment, if the destination determination button 60a is pressed, the first controller 11 (see FIG. 17) transmits an alternative selected in the selection field 60b of the desired travel time 40a, and the desired facility 40d input in the input field 60j of the desired facility 40d to the server 301.

In a case in which the desired conditions 340 include the desired travel distance 40b, the input field 60j of the desired facility 40d is added to the desired travel distance input screen 61 shown in FIG. 4. If the destination determination button 60a is pressed, the first controller 11 (see FIG. 17) transmits an alternative selected in the selection field 61b of the desired travel distance 40b, and the desired facility 40d input in the input field 60j of the desired facility 40d to the server 301. That is, the mobile terminal 1 in the third embodiment is configured to transmit one of the desired travel time 40a and the desired travel distance 40b, and the desired facility 40d to the server 301.

### (Selection of Destination)

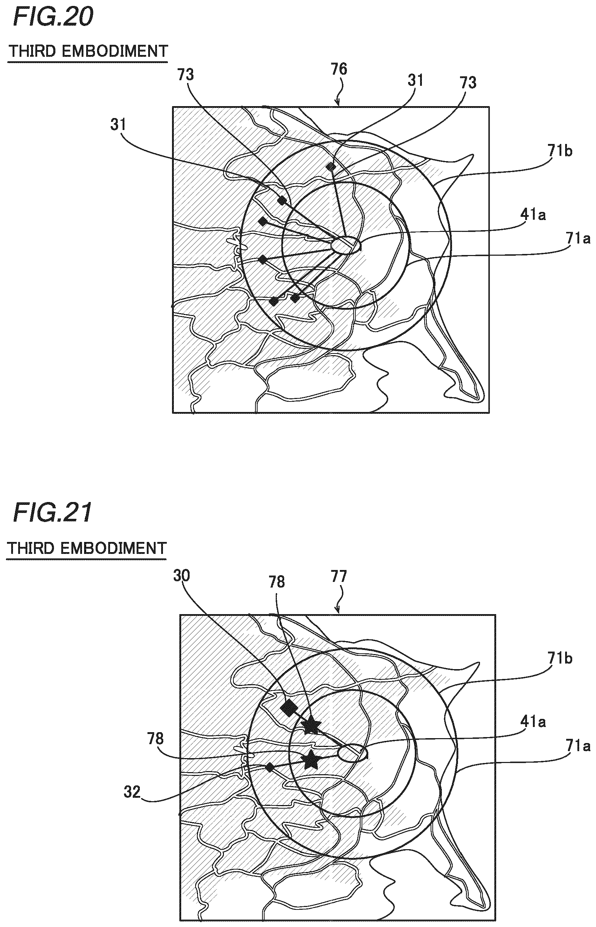

A configuration in which the second controller 321 (see FIG. 17) selects the destination 30 (see FIG. 21) based on the desired conditions 240 (see FIG. 18) including the desired waypoint 40c (see FIG. 18) is now described with reference to FIGS. 20 and 21. Screens 76 and 77 shown in FIGS. 20 and 21 are screens illustrated to explain the configuration in which the second controller 321 selects the destination 30, and are not displayed on the mobile terminal 1 (see FIG. 17).

The destination selector/transmitter 321b (see FIG. 17) sets circles 71a and 71b based on the desired travel time 40a (see FIG. 18) or the desired travel distance 40b (see FIG. 18) as shown in the screen 76 of FIG. 20. The configuration in which the destination selector/transmitter 321b sets the circle 71a and circle 71b is similar to the configuration in which the destination selector/transmitter 21b sets the circle 71a and circle 71b in the first embodiment, and its description is omitted.

The destination selector/transmitter 321b connects the current location indicated by an ellipse 41a to the destination candidates 31 that are located outside the circle 71a and inside the circle 71b in the plurality of destination candidates 31 by straight lines 73.

Subsequently, the destination selector/transmitter 21b (see FIG. 17) determines whether the facility that input as the desired facility 40d (see FIG. 18) is located on a straight line 73 connecting the destination candidate 31 (see FIG. 20) to the current location as shown in FIG. 21. Star marks 78 indicated in FIG. 21 show facilities input as the desired facility 40d.

The destination selector/transmitter 321b determines the destination candidates 31 that include the star marks 78 on their straight lines 73 connecting the destination candidates 31 to the current location as to-be-displayed destination candidates 32.

Subsequently, the destination selector/transmitter 21b (see FIG. 17) randomly selects the destination 30 from the to-be-displayed destination candidates 32. Subsequently, the server 301 transmits the destination 30 selected, and the to-be-displayed destination candidates 32 to the mobile terminal 1 similar to the first embodiment. Also, the mobile terminal 1 displays the destination 30 and the to-be-displayed destination candidates 32 received on the display 12. The destination selector/transmitter 321b excludes the destination candidates 31 that do not include the desired facility 40d on their straight lines 73 from the to-be-displayed destination candidates 32. In other words, the destination candidates 31 that do not include the desired facility 40d on their straight lines 73 are not displayed on the display 12 even if they satisfy the conditions of the desired travel time 40a or the desired travel distance 40b.

### (Destination Indication Processing)

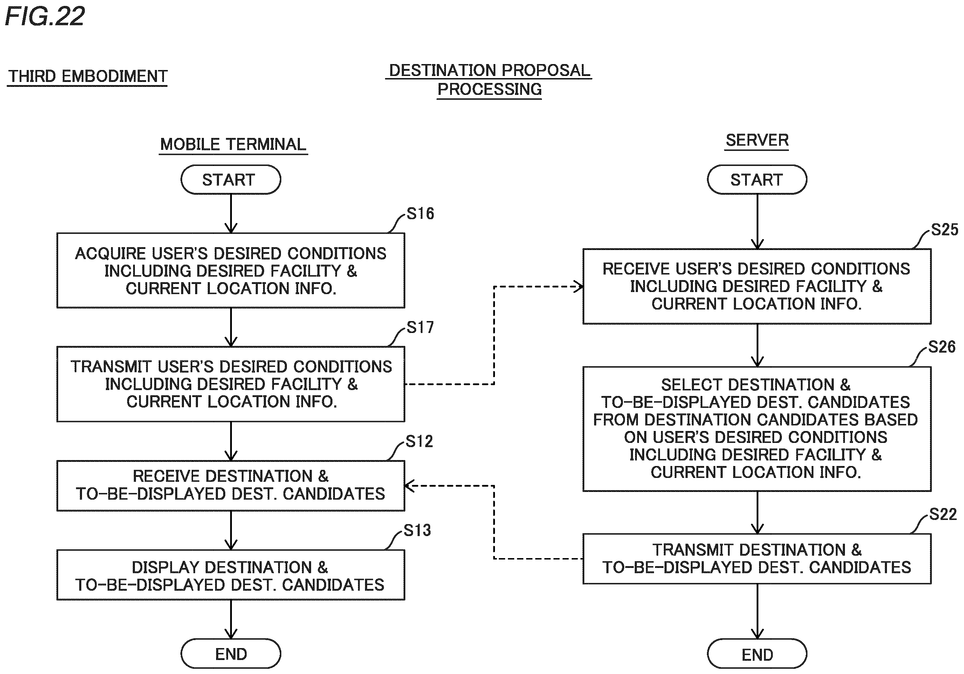

Processing in which the server 301 (see FIG. 17) according to the third embodiment selects the destination 30 (see FIG. 17), and displays the destination on the display 12 (see FIG. 17) of the mobile terminal 1 (see FIG. 17) is now described with reference to FIG. 22. The same processes as those of the server 2 (see FIG. 1) according to the first embodiment for selecting the destination 30 and displaying the destination selected on the display 12 are denoted by the same reference numerals, and their description is omitted.

In step S16, the mobile terminal 1 acquires the desired conditions 340 (see FIG. 18) including the desired facility 40d (see FIG. 18), and the information on the current location 41 of the user (see FIG. 17). In the third embodiment, the mobile terminal 1 acquires the motorcycle-type information 42 (see FIG. 17).

In step S17, the mobile terminal 1 transmits the desired conditions 340 including the desired facility 40d, and the information on the current location 41 of the user to the server 301 via the network 90 (see FIG. 17). In the third embodiment, the mobile terminal 1 transmits the motorcycle-type information 42 in addition to the desired conditions 340 and user's the information on the current location 41 to the server 201.

After that, the procedure moves to processing in the server 301. In step S25, the server 301 (condition acquirer 321a (see FIG. 17)) receives the desired conditions 340. Specifically, the condition acquirer 321a acquires the desired conditions 340 including the desired facility 40d and the information on the current location 41 of the user through the mobile terminal 1. In the third embodiment, the condition acquirer 321a acquires the motorcycle-type information 42 in addition to the desired conditions 340 and the information on the current location 41 of the user through the mobile terminal 1.

In step S26, the server 301 (destination selector/transmitter 321b (see FIG. 17)) selects the destination 30 and the to-be-displayed destination candidates 32 from a plurality of destination candidates 31 based on the desired conditions 340 including the desired facility 40d, and the information on the current location 41 of the user as shown in FIGS. 20 and 21. In the third embodiment, the destination selector/transmitter 321b selects the destination 30 and the to-be-displayed destination candidates 32 from a plurality of destination candidates 31 based on the motorcycle-type information 42 in addition to the desired conditions 340 including the desired facility 40d, and the information on the current location 41 of the user.

In step S22, the server 301 transmits the destination 30 selected, and the to-be-displayed destination candidates 32 to the mobile terminal 1. Subsequently, the processing in the server 301 ends.

After that, the procedure moves to processing in the mobile terminal 1. That is, in steps S12 and S13, the mobile terminal 1 receives the destination 30 and the plurality of destination candidates 31 transmitted. Subsequently, the mobile terminal 1 displays the destination 30 and two or more to-be-displayed destination candidates 32 received on the display 12. Subsequently, the processing by the mobile terminal 1 is finished.

The other configuration of the third embodiment is similar to the configuration of the aforementioned first embodiment.

### Advantages of Third Embodiment

In the third embodiment, the following advantages are obtained.

In the third embodiment, as described above, the desired conditions 340 further include a desired facility 40d, which is the waypoint desired by the user of the motorcycle; the condition acquirer 321a is configured to acquire the one of the desired travel time 40a and the desired travel distance 40b, and the desired facility 40d through the mobile terminal 1; and the destination selector/transmitter 321b is configured to select the destination 30 based on the one of the desired travel time 40a and the desired travel distance 40b, the desired facility 40d, the motorcycle-type information 42, and the information on the current location 41. Accordingly, the user of the motorcycle can select a destination 30 of a route passing through the desired facility 40d, which is a facility desired by the user. Consequently, because the user can be shown not merely the destination 30 but the destination 30 including a waypoint in accordance with user's desire, it is possible to provide a destination selection system 300 capable of improving satisfaction to the user of the motorcycle.

The other advantages of the third embodiment are similar to the advantages of the aforementioned first embodiment.

### [Modified Embodiments]

Note that the embodiment disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

While the example in which the straddle type vehicle 3 includes the third communicator 3a has been shown in the aforementioned first to third embodiments, the present invention is not limited to this. For example, alternatively, the straddle type vehicle can include no third communicator 3a. In this case, the destination arrival determiner can be configured to determine whether the user arrives at the destination 30 based only on the information on the current location 41, and the information on the destination 30 transmitted from the mobile terminal 1.

While the example in which a QR code (registered trademark) is displayed by the destination selector/transmitter 21b (destination selector/transmitter 221b and destination selector/transmitter 321b) so that the user shares the destination 30 with other users has been shown in the aforementioned first to third embodiments, the present invention is not limited to this. For example, alternatively, the destination selector/transmitter is configured to be able to transmit the destination 30 randomly selected to the mobile terminals 1 of a plurality of users who have a group motorcycle ride as the user in a motorcycling group formed by the plurality of users. That is, the destination selector/transmitter can be configured to be able to transmit the destination 30 to the mobile terminals 1 of the users in the motorcycling group connected to the server via the network 90. According to this configuration, because the destination 30 that is randomly selected is transmitted to the mobile terminals 1 of the users in the motorcycling group, the users in the motorcycling group can easily share the destination 30. Consequently, it is possible to improve usability of the users who have a group motorcycle ride in the motorcycling group.

Also, the destination selector/transmitter can be configured to acquire, from the mobile terminals 1, information on inputs of selections of one by the users in the motorcycling group from the candidates for the destination 30 that are randomly selected, and to select one of the candidates for the destination 30 that has a highest number of selections as the destination 30. Specifically, the destination selector/transmitter accepts destinations 30 randomly selected from the users in the motorcycling group. Subsequently, the destination selector/transmitter transmits the destinations 30 accepted from the users in the motorcycling group as alternatives of candidates for the destination 30 to the users. Subsequently, the destination selector/transmitter accepts inputs of selections of one by the users in the motorcycling group from the candidates for the destination 30 that are randomly selected. Finally, the destination selector/transmitter selects the candidate for the destination 30 that has a highest number of selections as the destination 30, and transmits the destination selected to the mobile terminals 1 of the users. According to this configuration, because opinions of the users in the motorcycling group can be reflected on proposal of the destination 30, it is possible to suppress increase of a burden on a specific user as compared with a case in which users who have a group motorcycle ride to the destination 30 that is selected by one of the users in the motorcycling group.

Also, the destination selector/transmitter can be configured to be able to transmit, to the mobile terminals 1 of the users in the motorcycling group, the destination 30 selected by a representative of the motorcycling group from the candidates for the destination 30 randomly selected. Specifically, the destination selector/transmitter can be configured to transmit a destination 30 that is randomly selected based on the desired conditions of the representative of the motorcycling group to the representative and users on the motorcycling group other than the representative. According to this configuration, because the users in the motorcycling group share the destination 30 that is solely selected by the representative of the motorcycling group so that the representative can be freed from time and effort to transmit (a burden of transmitting) the destination 30 to each user in the motorcycling group, it is possible to improve usability for the representative.

While the example in which the bonus provider 21d is configured to provide points 50 as a predetermined bonus to the user if the user arrives at the destination 30 has been shown in the aforementioned first to third embodiments, the present invention is not limited to this. Alternatively, in the present invention, the bonus provider can be configured to provide the points 50 to another user. Specifically, the points 50 can be provided from a predetermined user to another user in the motorcycling group; and the bonus provider is configured to acquire information on the user who is provided with the points 50 from the mobile terminal 1, and to provide the points 50 to the another user based on the information acquired on the user who is provided with the points 50. According to this configuration, the points 50 can be provided between the users in the motorcycling group. Consequently, even in a case in which a specific user has a burden, for example in a case in which a representative determines the destination 30, reduction of satisfaction of the specific user can be prevented by providing the points 50 to the specific user from other users.

While the example in which the bonus provider 21d is configured to provide points 50 as a predetermined bonus if the user arrives at the destination 30 has been shown in the aforementioned first to third embodiments, the present invention is not limited to this. Alternatively, in the present invention, the bonus provider can be configured to provide a bonus other than the points 50 to the user. For example, the bonus provider can be configured to provide data of a travel ticket, data of a charge amount in a prepaid app, bonus data of a predetermined gasoline-refueling amount, or the like as the predetermined bonus if the user arrives at the destination 30.

While the example in which the bonus provider 21d is configured to provide points 50 as a predetermined bonus to the user if the user arrives at the destination 30 has been shown in the aforementioned first to third embodiments, the present invention is not limited to this. Alternatively, in the present invention, the bonus provider can be configured to provide no point 50 to the user who arrives at the destination 30. However, if the bonus provider provides no point 50 to the user who arrives at the destination 30, motivation of the user to go to the destination 30 by using the straddle type vehicle 3 can be reduced. For this reason, the bonus provider is preferably configured to provide the points 50 to the user if the user arrives at the destination 30.

While the example in which the bonus provider 21d is configured to provide the user with the points 50 exchangeable for a gift relating to the motorcycle if the user arrives at the destination 30 has been shown in the aforementioned first to third embodiments, the present invention is not limited to this. Alternatively, in the present invention, the bonus provider can be configured to provide the user with points exchangeable for a gift other than the gift relating to the motorcycle if the user arrives at the destination 30. Any points can be provided to the user as long as the points can enhance the user to motivate to go to the destination 30 by using the straddle type vehicle 3.

While the example in which the second controller 221 is configured to display the selection field 60g for selecting the mountain-side course alternative or the sea-side course alternative as the desired waypoint 40c on the mobile terminal 1 has been shown in the aforementioned second embodiment, the present invention is not limited to this. Alternatively, in the present invention, the second controller 221 can be configured to display the selection field 60g that includes another alternative other than the mountain-side course alternative and the sea-side course alternative as an alternative of the desired waypoint 40c on the mobile terminal 1. For example, the second controller can be configured to display a selection field that includes an alternative of a course including a specific road, and the like as an alternative of the desired waypoint on the mobile terminal 1.

While the example in which the second controller 321 is configured to display the input field 60j of the desired facility 40d on the mobile terminal 1 has been shown in the aforementioned third embodiment, the present invention is not limited to this. Alternatively, in the present invention, the second controller can be configured to display a selection field that allows the user to select a genre of the desired facility on the mobile terminal 1. Also, the second controller can be configured to display a selection field that allows the user to select one of desired facilities that were input by the user on the mobile terminal 1.

While the example in which the second controller 21 (second controller 221 or second controller 321) is configured to display the selection field 60b for selecting one of the beginner alternative 60d, the intermediate alternative 60e, and the advanced alternative 60f as the desired travel time 40a on the mobile terminal 1 has been shown in the aforementioned first to third embodiments, the present invention is not limited to this. Alternatively, in the present invention, the second controller can be configured to display an input field that allows the user to input the desired travel time 40a on the mobile terminal 1.

While the example in which the second controller 21 (second controller 221 or second controller 321) is configured to display the beginner alternative 60d corresponding to a ride of one to two hours, the intermediate alternative 60e corresponding to a ride of two to four hours, and the advanced alternative 60f corresponding to a ride of four to six hours as alternatives in the selection field 60b of the desired travel time 40a on the mobile terminal 1 has been shown in the aforementioned first to third embodiments, the present invention is not limited to this. The alternatives for the desired travel time 40a are merely illustrative, and desired travel time can be any time other than the times described in the aforementioned first to third embodiments as long as time periods of alternatives increase in order of beginner, intermediate and advanced alternatives.

While the example in which the second controller 21 (second controller 221 or second controller 321) is configured to display the selection field 61b for selecting one of the beginner alternative 61d, the intermediate alternative 61e, and the advanced alternative 61f as the desired travel distance 40b on the mobile terminal 1 has been shown in the aforementioned first to third embodiments, the present invention is not limited to this. Alternatively, in the present invention, the second controller can be configured to display an input field that allows the user to input the desired travel distance 40b on the mobile terminal 1.

While the example in which the second controller 21 (second controller 221 or second controller 321) is configured to display the beginner alternative 61d corresponding to a ride of 10 to 20 km, the intermediate alternative 61e corresponding to a ride of 20 to 40 km, and the advanced alternative 61f corresponding to a ride of 40 to 60 km as alternatives in the selection field 61b of the desired travel distance 40b on the mobile terminal 1 has been shown in the aforementioned first to third embodiments, the present invention is not limited to this. The alternatives for the desired travel distance 40b are merely illustrative, and desired travel time can be any distance other than the distances described in the aforementioned first to third embodiments as long as distances of alternatives increase in order of beginner, intermediate and advanced alternatives.

While the example in which the destination selector/transmitter 21b (destination selector/transmitter 221b or destination selector/transmitter 321b) is configured to display two or more to-be-displayed destination candidates 32 in addition to the destination 30 on the mobile terminal 1 has been shown in the aforementioned first to third embodiments, the present invention is not limited to this. Alternatively, in the present invention, the destination selector/transmitter can be configured to display no to-be-displayed destination candidate 32 as long as the destination selector/transmitter displays the destination 30 on the mobile terminal 1. However, if the destination selector/transmitter is configured to display no to-be-displayed destination candidate 32, the user cannot select the destination 30 that is suitable for the convenience to the user of the motorcycle. For this reason, the destination selector/transmitter is preferably configured to display two or more to-be-displayed destination candidates 32 in addition to the destination 30 on the mobile terminal 1.

While the example in which the straddle type vehicle 3 includes the motorcycle has been shown in the aforementioned first to third embodiments, the present invention is not limited to this. Alternatively, in the present invention, the straddle type vehicle can include an electric-assisted bicycle including a drive unit such as an electric motor for assisting a driving force.

While the example in which the destination selector/transmitter 21b selects the destination 30 based on one of the desired travel time 40a and the desired travel distance 40b, and the information on the current location 41 has been shown in the aforementioned first embodiment, the present invention is not limited to this. For example, alternatively, in the present invention, the destination selector/transmitter can select the destination 30 based on one of the desired travel time 40a and the desired travel distance 40b, and on the information on the current location 41 and a remaining fuel amount of the straddle type vehicle 3. Also, for example, in a case in which the straddle type vehicle 3 includes an electric-assisted bicycle, the destination selector/transmitter can select the destination 30 based on one of the desired travel time 40a and the desired travel distance 40b, and on the information on the current location 41 and a remaining battery amount of the electric-assisted bicycle.

While the example in which screens of the desired travel time input screen 60, the desired travel distance input screen 61, the destination display screen 62, the point-providing screen 63, the desired waypoint input screen 260, and the desired facility input screen 360 are generated in the server 2 (server 201 or server 301), and are displayed on the display 12 of the mobile terminal 1 has been shown in the aforementioned first to third embodiments, the present invention is not limited to this. Alternatively, in the present invention, screens of the desired travel time input screen 60, the desired travel distance input screen 61, the destination display screen 62, the point-providing screen 63, the desired waypoint input screen 260, and the desired facility input screen 360 can be generated in the mobile terminal 1, and be displayed on the display 12.

While the example in which processes of the second controller 21 (second controller 221 or second controller 321) are described by using a flow-driven-step type flowchart in order of a processing flow has been shown for ease of illustration in the aforementioned first to third embodiments, the present invention is not limited to this. Alternatively, in the present invention, processes of the second controller can be executed in event-driven type processing in which the processes are executed on an event-by-event basis. In this case, the processes can be executed fully in the event-driven type processing or in combination of the event-driven type processing and flow-driven-step type processing.

## Claims

1. A destination proposal system for proposing a destination (30) of a straddle type vehicle (3) to a user by displaying the destination (30) on a mobile terminal (1) carried by the user, the destination proposal system comprising:
a server and a mobile terminal, wherein the server comprises:
a condition acquirer (21a, 221a, 321a) that acquires a desired condition(s) (40, 240, 340), which is/are a condition(s) of the destination (30) desired by the user, and information on a current location (41) of the user through the mobile terminal (1) carried by the user;
a destination selector/transmitter (21b, 221b, 321b) that selects two or more to-be-displayed destination candidates (32), which are candidates for a destination (30) to be proposed to the user by displaying at a display of the the mobile terminal (1), from a plurality of destination candidates (31) previously stored in a second storage of the server based on the desired condition(s) (40, 240, 340) and the information on the current location (41), selects a proper destination as the destination (30) to be set as user's destination from the two or more to-be-displayed destination candidates (32), and transmits the destination (30) selected to the mobile terminal (1); and
a destination arrival determiner (21c) that determines whether the user arrives at the destination (30) transmitted by the destination selector/transmitter (21b, 221b, 321b); wherein the mobile terminal is configured to be able to communicate with a communicator (3a) of the straddle type vehicle (3); and
**characterized in that**
the destination selector/transmitter (21b, 221b, 321b) randomly selects the proper destination; and
the destination arrival determiner (21c) is configured to determine whether the user arrives at the destination (30) based on the information on the current location (41) transmitted from the mobile terminal (1) and on whether the mobile terminal (1) and the communicator (3a) are communicatively connected to each other.

2. The destination proposal system (100, 200, 300) according to claim 1 further comprising a bonus provider (21d) that is a processor and that provides a predetermined bonus to the user if the destination arrival determiner (21c) determines that the user arrives at the destination (30).

3. The destination proposal system (100, 200, 300) according to claim 2, wherein
the straddle type vehicle (3) includes a motorcycle; and
the bonus provider (21d) that is the processor and is configured to provide the user with a point(s) (50) as the predetermined bonus exchangeable for a gift relating to the motorcycle by the user if the user arrives at the destination (30).

4. The destination proposal system (100, 200, 300) according to claim 3, wherein the destination selector/transmitter (21b, 221b, 321b) is configured to transmit the two or more to-be-displayed destination candidates (32) selected to the mobile terminal (1) for displaying on the mobile terminal (1).

5. The destination proposal system (100, 200, 300) according to claim 4, wherein
the desired condition(s) (40, 240, 340) includes/include one of a desired travel time (40a), which is a travel time desired by the user of the motorcycle, and a desired travel distance (40b), which is a travel distance desired by the user of the motorcycle;
the condition acquirer (21a, 221a, 321a) is configured to acquire the one of the desired travel time (40a) and the desired travel distance (40b) through the mobile terminal (1); and
the destination selector/transmitter (21b, 221b, 321b) is configured to select the destination (30) based on the one of the desired travel time (40a) and the desired travel distance (40b), and the information on the current location (41).

6. The destination proposal system (100, 200, 300) according to claim 5, wherein
the condition acquirer (21a) is configured to acquire the desired condition(s) (40, 240, 340), the information on the current location (41), and motorcycle-type information (42), which is information on a type of the motorcycle owned by the user, including information on the motorcycle displacement or whether the motorcycle is a small or large type, through the mobile terminal (1); and
the destination selector/transmitter (21b, 221b, 321b) is configured to select the destination (30) based on the desired condition(s) (40, 240, 340), the information on the current location (41), and the motorcycle-type information (42) acquired by the condition acquirer (21a, 221a, 321a) through the mobile terminal (1).

7. The destination proposal system (200, 300) according to claim 6, wherein the destination selector/transmitter (221b, 321b) is configured to select the destination (30) of a route passing through a waypoint suitable for motorcycle riding based on the desired condition(s) (240, 340), the motorcycle-type information (42), and the information on the current location (41) acquired by the condition acquirer (221a, 321a) through the mobile terminal (1).

8. The destination proposal system (200) according to claim 7, wherein
the desired conditions (240) further include a desired waypoint (40c), which is the waypoint desired by the user of the motorcycle;
the condition acquirer (221a) is configured to acquire the one of the desired travel time (40a) and the desired travel distance (40b), and the desired waypoint (40c) through the mobile terminal (1); and
the destination selector/transmitter (221b) is configured to select the destination (30) based on the one of the desired travel time (40a) and the desired travel distance (40b), the desired waypoint (40c), the motorcycle-type information (42), and the information on the current location (41).

9. The destination proposal system (300) according to claim 7, wherein
the desired conditions (340) further include a desired facility (40d), which is a facility desired by the user of the motorcycle;
the condition acquirer (321a) is configured to acquire the one of the desired travel time (40a) and the desired travel distance (40b), and the desired facility (40d) through the mobile terminal (1); and
the destination selector/transmitter (321b) is configured to select the destination (30) based on the one of the desired travel time (40a) and the desired travel distance (40b), the desired facility (40d), the motorcycle-type information (42), and the information on the current location (41).

10. The destination proposal system (100, 200, 300) according to any of claims 3 to 9, wherein the destination selector/transmitter (21b, 221b, 321b) is configured to be able to transmit the destination (30) randomly selected to the mobile terminals (1) of a plurality of users who have a group motorcycle ride as the user in a motorcycling group formed by the plurality of users.

11. The destination proposal system (100, 200, 300) according to claim 10, wherein the destination selector/transmitter (21b, 221b) is configured to accept destinations (30) that are randomly selected from the users in the motorcycling group, transmit the destinations (30) accepted from the users in the motorcycling group as alternatives for candidates for the destination (30) to the users, and acquire, from the mobile terminals (1), information on inputs of selections of one by the users in the motorcycling group from the candidates for the destination (30) that are randomly selected, and to select one of the candidates for the destination (30) that has a highest number of selections as the destination (30).

12. The destination proposal system (100, 200, 300) according to claim 10 or 11, wherein the destination selector/transmitter (21b, 221b, 321b) is configured to be able to transmit, to the mobile terminals (1) of the users in the motorcycling group, the destination (30) selected by a representative of the motorcycling group from the candidates for the destination (30) randomly selected.

13. The destination proposal system (100, 200, 300) according to claim 10, wherein
the point(s) is/are able to be provided from a predetermined user to another user in the motorcycling group; and
the bonus provider (21d, 221b, 321b) that is the processor and is configured to acquire information on the user who is provided with the point(s) from the mobile terminal (1), and to provide the point(s) to the another user based on the information acquired on the user who is provided with the point(s).

14. A destination proposal method for proposing a destination (30) of a straddle type vehicle (3) to a user by displaying the destination (30) on a mobile terminal (1) carried by the user, the destination proposal method comprising:
acquiring a desired condition(s) (40, 240, 340), which is/are a condition(s) of the destination (30) desired by the user, and information on a current location (41) of the user;
selecting two or more to-be-displayed destination candidates (32), which are candidates for a destination (30) to be proposed to the user, from a plurality of destination candidates (31) previously stored based on the desired condition(s) (40, 240, 340) and the information on the current location (41);
selecting a proper destination as the destination (30) to be set as user's destination from the two or more to-be-displayed destination candidates (32) by displaying at a display of the mobile terminal (1);
transmitting the destination (30) selected to the mobile terminal (1);
displaying the destination (30) transmitted on the mobile terminal (1);
determining whether the mobile terminal (1) and a communicator (3a) that is included in the straddle type vehicle (3) and is configured to be able to communicate with the mobile terminal (1), are communicatively connected to each other; and
**characterized by**
randomly selecting the proper destination; and
determining whether the user arrives at the destination (30) based on the information on the current location (41) transmitted from the mobile terminal (1) and on whether the mobile terminal (1) and the communicator (3a) are communicatively connected to each other in the determining whether the user arrives at the destination (30).

15. The destination proposal method according to claim 14 further comprising providing a predetermined bonus to the user if the user arrives at the destination (30) by a bonus provider (21d) that is a processor.

16. The destination proposal method according to claim 15 wherein
the straddle type vehicle (3) includes a motorcycle; and
the user is provided with a point(s), by the bonus provider (21d) that is the processor, as the predetermined bonus exchangeable for a gift relating to the motorcycle by the user in the providing the predetermined bonus to the user if the user arrives at the destination (30).

17. The destination proposal method according to claim 16 wherein
the randomly selecting a proper destination as the destination (30) includes
the destination (30) selected and the two or more to-be-displayed destination candidates (32) are transmitted to the mobile terminal (1) in the transmitting the destination (30) selected to the mobile terminal (1); and
the destination (30) and the two or more to-be-displayed destination candidates (32) transmitted are displayed in the displaying the destination (30) transmitted on the mobile terminal (1).

18. The destination proposal method according to claim 17 wherein
the desired condition(s) (40, 240, 340) includes/include one of a desired travel time (40a), which is a travel time desired by the user of the motorcycle, and a desired travel distance (40b), which is a travel distance desired by the user of the motorcycle;
the destination proposal method further comprises transmitting the one of the desired travel time (40a) and the desired travel distance (40b) from the mobile terminal (1); and
the destination (30) is selected based on the one of the desired travel time (40a) and the desired travel distance (40b) transmitted from the mobile terminal (1), and the information on the current location (41) in the randomly selecting the proper destination as the destination (30).

19. The destination proposal method according to claim 18 wherein
the desired condition(s) (40, 240, 340), the information on the current location (41), and motorcycle-type information (42), which is information on a type of the motorcycle owned by the user, including information on the motorcycle displacement or whether the motorcycle is a small or large type, are transmitted from the mobile terminal (1) in the transmitting the one of the desired travel time (40a) and the desired travel distance (40b) from the mobile terminal (1); and
the destination (30) is selected based on the desired condition(s) (40, 240, 340), the information on the current location (41), and the motorcycle-type information (42) transmitted from the mobile terminal (1) in the randomly selecting the proper destination as the destination (30).

## Patentansprüche

1. Ein Zielvorschlagssystem zum Vorschlagen eines Ziels (30) eines Spreizsitzfahrzeugs (3) an einen Benutzer durch Anzeigen des Ziels (30) auf einem vom Benutzer mitgeführten mobilen Endgerät (1), wobei das Zielvorschlagssystem umfasst:
einen Server und ein mobiles Endgerät, wobei der Server umfasst:
einen Zustandserfasser (21a, 221a, 321a), der einen oder mehrere gewünschte Zustände (40, 240, 340), bei denen es sich um einen oder mehrere Zustände des vom Benutzer gewünschten Ziels (30) handelt, und Informationen über einen aktuellen Standort (41) des Benutzers über das vom Benutzer mitgeführte mobile Endgerät (1) erfasst;
einen Zielauswähler/-sender (21b, 221b, 321b), der zwei oder mehr anzuzeigende Zielkandidaten (32) auswählt, die Kandidaten für ein dem Benutzer vorzuschlagendes Ziel (30) sind, indem er sie auf einem Display des mobilen Endgeräts (1) anzeigt, und zwar aus einer Mehrzahl von Zielkandidaten (31), die zuvor in einem zweiten Speicher des Servers auf der Grundlage der/die gewünschte(n) Zustand/Zustände (40, 240, 340) und den Informationen über den aktuellen Standort (41) zuvor in einem zweiten Speicher des Servers gespeichert wurden, auswählt, ein geeignetes Ziel als das Ziel (30) auswählt, das als Ziel des Benutzers festgelegt werden soll, aus den zwei oder mehr anzuzeigenden Zielkandidaten (32) und das ausgewählte Ziel (30) an das mobile Endgerät (1) überträgt; und
einer Zielankunftsbestimmungseinrichtung (21c), die bestimmt, ob der Benutzer an dem vom Zielauswähler/-sender (21b, 221b, 321b) übertragenen Ziel (30) ankommt; wobei
das mobile Endgerät so konfiguriert ist, dass es mit einem Kommunikationsgerät des Spreizsitzfahrzeugs kommunizieren kann; und
**dadurch gekennzeichnet, dass**
der Zielauswähler/-sender (21b, 221b, 321b) das geeignete Ziel zufällig auswählt; und
die Zielankunftsbestimmungseinrichtung (21c) so konfiguriert ist, dass sie auf der Grundlage der vom mobilen Endgerät (1) übertragenen Informationen über den aktuellen Standort (41) und der Tatsache, ob das mobile Endgerät (1) und das Kommunikationsgerät (3a) miteinander in Kommunikationsverbindung stehen, bestimmt, ob der Benutzer am Ziel (30) angekommen ist.

2. Das Zielvorschlagssystem (100, 200, 300) gemäß Anspruch 1 umfasst ferner einen Bonusgeber (21d), der ein Prozessor ist und dem Benutzer einen vorbestimmten Bonus gewährt, wenn die Zielankunftsbestimmungseinrichtung (21c) bestimmt, dass der Benutzer am Ziel (30) ankommt.

3. Das Zielvorschlagssystem (100, 200, 300) gemäß Anspruch 2, wobei das Spreizsitzfahrzeug (3) ein Motorrad enthält; und
der Bonusgeber (21d), der der Prozessor ist und so konfiguriert ist, dass er dem Benutzer einen oder mehrere Punkte (50) als den vorbestimmten Bonus gewährt, der vom Benutzer gegen ein Geschenk im Zusammenhang mit dem Motorrad eingetauscht werden kann, wenn der Benutzer am Ziel (30) ankommt.

4. Das Zielvorschlagssystem (100, 200, 300) gemäß Anspruch 3, wobei der Zielauswähler/-sender (21b, 221b, 321b) so konfiguriert ist, dass er die zwei oder mehr anzuzeigenden Zielkandidaten (32), die ausgewählt wurden, an das mobile Endgerät (1) zu senden, um sie auf dem mobilen Endgerät anzuzeigen (1).

5. Das Zielvorschlagssystem (100, 200, 300) gemäß Anspruch 4, wobei
der/die gewünschte(n) Zustand/Zustände (40, 240, 340) enthält/enthalten eine von einer gewünschten Fahrzeit (40a), die eine vom Benutzer des Motorrads gewünschte Fahrzeit ist, und eine gewünschte Fahrstrecke (40b), die eine vom Benutzer des Motorrads gewünschte Fahrstrecke ist;
der Zustandserfasser (21a, 221a, 321a) so konfiguriert ist, dass er die gewünschte Fahrzeit (40a) und die gewünschte Fahrstrecke (40b) über das mobile Endgerät (1) erfasst; und
der Zielauswähler/-sender (21b, 221b, 321b) ist so konfiguriert, dass er das Ziel (30) auf der Grundlage der gewünschten Fahrzeit (40a) und/oder der gewünschten Fahrstrecke (40b) und der Informationen über den aktuellen Standort (41) auswählt.

6. Das Zielvorschlagssystem (100, 200, 300) gemäß Anspruch 5, wobei
der Zustandserfasser (21a) so konfiguriert ist, dass er der/die gewünschte(n) Zustand/Zustände (40, 240, 340), die Informationen über den aktuellen Standort (41) und die Informationen über den Motorradtyp (42), bei denen es sich um Informationen über einen Typ des vom Benutzer besessenen Motorrads handelt, die Informationen über den Hubraum des Motorrads oder darüber, ob es sich um ein kleines oder großes Motorrad handelt, enthalten, über das mobile Endgerät (1) zu erfassen; und
der Zielauswähler/-sender (21b, 221b, 321b) so konfiguriert ist, dass er das Ziel (30) auf der Grundlage des/der gewünschte(n) Zustand/Zustände (40, 240, 340), der/die Informationen über den aktuellen Standort (41) und der Informationen über den Motorradtyp (42), die vom Zustandserfasser (21a, 221a, 321a) über das mobile Endgerät (1) erfasst wurden, auswählt.

7. Das Zielvorschlagssystem (200, 300) gemäß Anspruch 6, wobei der Zielauswähler/- sender (221b, 321b) so konfiguriert ist, dass er das Ziel (30) einer Route auswählt, die durch einen für das Motorradfahren geeigneten Wegpunkt führt, basierend auf den gewünschten Zustand(en) (240, 340), die Informationen zum Motorradtyp (42) und die Informationen zum aktuellen Standort (41), die vom Zustandserfasser (221a, 321a) über das mobile Endgerät (1) erfasst werden.

8. Das Zielvorschlagssystem (200) gemäß Anspruch 7, wobei
die gewünschten Zustände (240) ferner einen gewünschten Wegpunkt (40c) enthalten, der der vom Benutzer des Motorrads gewünschte Wegpunkt ist;
der Zustandserfasser (221a) so konfiguriert ist, dass er die gewünschte Reisezeit (40a) und die gewünschte Reisedistanz (40b) sowie den gewünschten Wegpunkt (40c) über das mobile Endgerät (1) erfasst; und
der Zielauswähler/-sender (221b) so konfiguriert ist, dass er das Ziel (30) auf der Grundlage der gewünschten Fahrzeit (40a) und/oder der gewünschten Fahrstrecke (40b), des gewünschten Wegpunkts (40c), der Motorradtyp-Informationen (42) und der Informationen über den aktuellen Standort (41) auswählt.

9. Das Zielvorschlagssystem (300) gemäß Anspruch 7, wobei
die gewünschten Zustände (340) ferner eine gewünschte Einrichtung (40d) enthalten, die eine vom Benutzer des Motorrads gewünschte Einrichtung ist;
der Zustandserfasser (321a) so konfiguriert ist, dass er die gewünschte Fahrzeit (40a) und die gewünschte Fahrstrecke (40b) sowie die gewünschte Einrichtung (40d) über das mobile Endgerät (1) erfasst; und
der Zielauswähler/-sender (321b) so konfiguriert ist, dass er das Ziel (30) auf der Grundlage der gewünschten Fahrzeit (40a) und/oder der gewünschten Fahrstrecke (40b), der gewünschten Einrichtung (40d), der Motorradtyp-Informationen (42) und der Informationen über den aktuellen Standort (41) auswählt.

10. Das Zielvorschlagssystem (100, 200, 300) gemäß irgendeinem der Ansprüche 3 bis 9, wobei der Zielauswähler/-sender (21b, 221b, 321b) so konfiguriert ist, dass er das zufällig ausgewählte Ziel (30) an die mobilen Endgeräte (1) einer Mehrzahl von Benutzern senden kann, die als Benutzer in einer Motorradgruppe, die aus der Mehrzahl von Benutzern gebildet wird, eine Gruppenmotorradfahrt unternehmen.

11. Das Zielvorschlagssystem (100, 200, 300) gemäß Anspruch 10, wobei der Zielauswähler/-sender (21b, 221b) so konfiguriert ist, dass er Ziele (30) akzeptiert, die zufällig aus den Benutzern in der Motorradgruppe ausgewählt werden, die von den Benutzern in der Motorradgruppe akzeptierten Ziele (30) als Alternativen für Kandidaten für das Ziel (30) an die Benutzer zu senden und von den mobilen Endgeräten (1) Informationen über die Eingaben der Auswahlen der Benutzer in der Motorradgruppe aus den zufällig ausgewählten Kandidaten für das Ziel (30) zu erfassen und einen der Kandidaten für das Ziel (30) mit der höchsten Anzahl von Auswahlen als Ziel (30) auszuwählen.

12. Das Zielvorschlagssystem (100, 200, 300) gemäß Anspruch 10 oder 11, wobei der Zielauswähler/-sender (21b, 221b, 321b) so konfiguriert ist, dass er das von einem Vertreter der Motorradgruppe aus den zufällig ausgewählten Kandidaten für das Ziel (30) ausgewählte Ziel (30) an die mobilen Endgeräte (1) der Benutzer in der Motorradgruppe übertragen kann.

13. Das Zielvorschlagssystem (100, 200, 300) gemäß Anspruch 10, wobei
der/die Punkt(e) von einem vorbestimmten Benutzer an einen anderen Benutzer in der Motorradgruppe bereitgestellt werden kann/können; und
der Bonus-Anbieter (21d, 221b, 321b), der der Prozessor ist und so konfiguriert ist, dass er Informationen über den Benutzer, dem der/die Punkt(e) bereitgestellt wird/werden, vom mobilen Endgerät (1) erfasst und den/die Punkt(e) dem anderen Benutzer auf der Grundlage der über den Benutzer, dem der/die Punkt(e) bereitgestellt wird/werden, erfassten Informationen bereitstellt.

14. Verfahren zum Vorschlagen eines Ziels (30) für ein Spreizsitzfahrzeug (3) an einen Benutzer durch Anzeigen des Ziels (30) auf einem vom Benutzer mitgeführten mobilen Endgerät (1), wobei das Verfahren zum Vorschlagen eines Ziels umfasst:
Erfassen einer oder mehrerer gewünschter Zustände (40, 240, 340), die ein oder mehrere Zustände des vom Benutzer gewünschten Ziels (30) sind, und von Informationen über einen aktuellen Standort (41) des Benutzers;
Auswählen von zwei oder mehr anzuzeigenden Zielkandidaten (32), die Kandidaten für ein dem Benutzer vorzuschlagendes Ziel (30) sind, aus einer Mehrzahl von zuvor gespeicherten Zielkandidaten (31) auf der Grundlage der/die gewünschte(n) Zustand/Zustände (40, 240, 340) und der Informationen über den aktuellen Standort (41);
Auswählen eines geeigneten Ziels als das Ziel (30), das als Ziel des Benutzers festgelegt werden soll, aus den zwei oder mehr anzuzeigenden Zielkandidaten (32) durch Anzeigen auf einer Anzeige des mobilen Endgeräts (1);
Übertragen des ausgewählten Ziels (30) an das mobile Endgerät (1);
Anzeigen des übertragenen Ziels (30) auf dem mobilen Endgerät (1);
Bestimmung, ob das mobile Endgerät (1) und ein Kommunikationsgerät (3a), das in dem Spreizsitzfahrzeug (3) enthalten ist und so konfiguriert ist, dass es mit dem mobilen Endgerät (1) kommunizieren kann, miteinander in Kommunikationsverbindung stehen; und
**gekennzeichnet durch**
zufälliges Auswählen des geeigneten Ziels; und
Bestimmung, ob der Benutzer am Ziel (30) ankommt, basierend auf den vom mobilen Endgerät (1) übertragenen Informationen über den aktuellen Standort (41) und darauf, ob das mobile Endgerät (1) und das Kommunikationsgerät (3a) miteinander in Verbindung stehen, um zu bestimmen, ob der Benutzer am Ziel (30) ankommt.

15. Das Zielvorschlagsverfahren gemäß Anspruch 14, das ferner das Bereitstellen eines vorbestimmten Bonus für den Benutzer umfasst, wenn der Benutzer am Ziel (30) ankommt, durch einen Bonusgeber (21d), der ein Prozessor ist.

16. Das Zielvorschlagsverfahren gemäß Anspruch 15, wobei
das Spreizsitzfahrzeug (3) ein Motorrad enthält; und
dem Benutzer durch den Bonusgeber (21d), der der Prozessor ist, ein oder mehrere Punkte als vorbestimmter Bonus gewährt werden, der gegen ein Geschenk im Zusammenhang mit dem Motorrad durch den Benutzer eingetauscht werden kann, wenn der Benutzer am Zielort (30) ankommt.

17. Das Zielvorschlagsverfahren gemäß Anspruch 16, wobei
die zufällige Auswahl eines geeigneten Ziels als Ziel (30) enthält das ausgewählte Ziel (30) und die zwei oder mehr anzuzeigenden Zielkandidaten (32) werden an das mobile Endgerät (1) übertragen, indem das ausgewählte Ziel (30) an das mobile Endgerät (1) übertragen wird; und
das übertragene Ziel (30) und die zwei oder mehr anzuzeigenden Zielkandidaten (32) beim Anzeigen des übertragenen Ziels (30) auf dem mobilen Endgerät (1) angezeigt werden.

18. Das Zielvorschlagsverfahren gemäß Anspruch 17, wobei
der/die gewünschte(n) Zustand/Zustände (40, 240, 340) eine gewünschte Fahrzeit (40a), die eine vom Benutzer des Motorrads gewünschte Fahrzeit ist, und/oder eine gewünschte Fahrstrecke (40b), die eine vom Benutzer des Motorrads gewünschte Fahrstrecke ist, enthält/enthalten;
wobei das Zielvorschlagsverfahren ferner das Übertragen der gewünschten Fahrzeit (40a) und/oder der gewünschten Fahrstrecke (40b) vom mobilen Endgerät (1) umfasst; und
das Ziel (30) wird auf der Grundlage der vom mobilen Endgerät (1) übertragenen gewünschten Fahrzeit (40a) und der gewünschten Fahrstrecke (40b) sowie der Informationen über den aktuellen Standort (41) ausgewählt, indem das geeignete Ziel zufällig als Ziel (30) ausgewählt wird.

19. Verfahren zum Vorschlagen eines Ziels gemäß Anspruch 18, wobei
der/die gewünschte(n) Zustand/Zustände (40, 240, 340), die Informationen über den aktuellen Standort (41) und die Motorradtyp-Informationen (42), bei denen es sich um Informationen über einen Typ des vom Benutzer besessenen Motorrads handelt, enthalten Informationen über den Hubraum des Motorrads oder darüber, ob es sich um ein kleines oder großes Motorrad handelt, vom mobilen Endgerät (1) übertragen werden, wenn die gewünschte Fahrzeit (40a) und die gewünschte Fahrstrecke (40b) vom mobilen Endgerät (1) übertragen werden; und
das Ziel (30) wird auf der Grundlage der/die gewünschte(n) Zustand/Zustände (40, 240, 340), der Informationen über den aktuellen Standort (41) und der Informationen über den Motorradtyp (42), die vom mobilen Endgerät (1) übertragen werden, bei der zufälligen Auswahl des geeigneten Ziels als Ziel (30) ausgewählt.

## Revendications

1. Système de proposition de destination destiné à proposer une destination (30) d'un véhicule à châssis surbaissé (3) à un utilisateur en affichant la destination (30) sur un terminal mobile (1) porté par l'utilisateur, le système de proposition de destination comprenant:
un serveur et un terminal mobile, dans lequel le serveur comprend:
un dispositif d'acquisition de conditions (21a, 221a, 321a) qui acquiert une ou plusieurs conditions souhaitées (40, 240, 340), qui sont une ou plusieurs conditions de la destination (30) souhaitée par l'utilisateur, et des informations sur l'emplacement actuel (41) de l'utilisateur par l'intermédiaire du terminal mobile (1) transporté par l'utilisateur;
un sélecteur/émetteur de destination (21b, 221b, 321 b) qui sélectionne deux ou plusieurs destinations candidates à afficher (32), qui sont des candidates pour une destination (30) à proposer à l'utilisateur en les affichant sur un écran du terminal mobile (1), parmi une pluralité de destinations candidates (31) préalablement stockées dans une seconde mémoire du serveur sur la base de la ou des conditions souhaitées (40, 240, 340) et les informations sur l'emplacement actuel (41), sélectionne une destination appropriée comme destination (30) à définir comme destination de l'utilisateur parmi les deux ou plusieurs destinations candidates à afficher (32), et transmet la destination (30) sélectionnée au terminal mobile (1); et
un dispositif de détermination d'arrivée à destination (21c) qui détermine si l'utilisateur arrive à la destination (30) transmise par le dispositif de sélection/ transmission de destination (21b, 221b, 321b); dans lequel
le terminal mobile est configuré pour pouvoir communiquer avec un communicateur (3a) du véhicule à chenilles (3);
**caractérisé en ce que**
le sélecteur/émetteur de destination (21b, 221b, 321b) sélectionne de manière aléatoire la destination appropriée; et
le dispositif de détermination d'arrivée à destination (21c) est configuré pour déterminer si l'utilisateur arrive à la destination (30) sur la base des informations sur l'emplacement actuel (41) transmises par le terminal mobile (1) et sur la base du fait que le terminal mobile (1) et le communicateur (3a) sont connectés entre eux de manière communicative.

2. Système de proposition de destination (100, 200, 300) selon la revendication 1 comprend en outre un fournisseur de bonus (21d) qui est un processeur et qui fournit un bonus prédéterminé à l'utilisateur si le dispositif de détermination d'arrivée à destination (21c) détermine que l'utilisateur arrive à destination (30).

3. Système de proposition de destination (100, 200, 300) selon la revendication 2, dans lequel
le véhicule à enfourcher (3) peut être une moto; et
le fournisseur de bonus (21d) qui est le processeur et qui est configuré pour fournir à l'utilisateur un ou plusieurs points (50) en tant que bonus prédéterminé échangeable contre un cadeau lié à la moto par l'utilisateur si l'utilisateur arrive à la destination (30).

4. Système de proposition de destination (100, 200, 300) selon la revendication 3, dans lequel le sélecteur/émetteur de destination (21b, 221b, 321b) est configuré pour transmettre les deux ou plusieurs destinations candidates à afficher (32) sélectionnées au terminal mobile (1) pour les afficher sur le terminal mobile (1).

5. Système de proposition de destination (100, 200, 300) selon la revendication 4, dans lequel
la ou les conditions souhaitées (40, 240, 340) comprennent l'une des suivantes : un temps de trajet souhaité (40a), qui est un temps de trajet souhaité par l'utilisateur de la moto, et une distance de trajet souhaitée (40b), qui est une distance de trajet souhaitée par le conducteur de la moto;
le dispositif d'acquisition de conditions (21a, 221a, 321a) est configuré pour acquérir l'un des éléments suivants: le temps de trajet souhaité (40a) et la distance de trajet souhaitée (40b) par l'intermédiaire du terminal mobile (1); et
le sélecteur/émetteur de destination (21b, 221b, 321b) est configuré pour sélectionner la destination (30) sur la base de l'un des éléments suivants: le temps de trajet souhaité (40a) et la distance de trajet souhaitée (40b), et les informations sur l'emplacement actuel (41).

6. Système de proposition de destination (100, 200, 300) selon la revendication 5, dans lequel
le dispositif d'acquisition de conditions (21a) est configuré pour acquérir la ou les conditions souhaitées (40, 240, 340), les informations sur l'emplacement actuel (41) et les informations sur le type de moto (42), qui sont des informations sur le type de moto de l'utilisateur, y compris des informations sur la cylindrée de la moto ou sur le fait que la moto est de petit ou grand format, par l'intermédiaire du terminal mobile (1); et
le sélecteur/émetteur de destination (21b, 221b, 321b) est configuré pour sélectionner la destination (30) sur la base des conditions souhaitées (40, 240, 340), des informations sur l'emplacement actuel (41) et des informations sur le type de moto (42) acquises par le dispositif d'acquisition de conditions (21a, 221a, 321a) via le terminal mobile (1).

7. Système de proposition de destination (200, 300) selon la revendication 6, dans lequel le sélecteur/émetteur de destination (221b, 321b) est configuré pour sélectionner la destination (30) d'un itinéraire passant par un point de passage adapté à la conduite d'une moto en fonction de la ou des conditions souhaitées(240, 340), les informations concernant le type de moto (42) et les informations sur l'emplacement actuel (41) acquises par l'acquéreur de conditions (221a, 321a) via le terminal mobile (1).

8. Système de proposition de destination (200) selon la revendication 7, dans lequel les conditions souhaitées (240) comprennent en outre un point de passage souhaité (40c), qui est le point de passage souhaité par l'utilisateur de la moto;
le dispositif d'acquisition de conditions (221a) est configuré pour acquérir l'un des éléments suivants : le temps de trajet souhaité (40a), la distance de trajet souhaitée (40b), et le point de passage souhaité (40c) par l'intermédiaire du terminal mobile (1); et
le sélecteur/émetteur de destination (221b) est configuré pour sélectionner la destination (30) sur la base de l'un des éléments suivants: le temps de trajet souhaité (40a), la distance de trajet souhaitée (40b), le point de passage souhaité (40c), les informations sur le type de moto (42) et les informations sur l'emplacement actuel (41).

9. Système de proposition de destination (300) selon la revendication 7, dans lequel
les conditions souhaitées (340) comprennent en outre une installation souhaitée (40d), qui est une installation souhaitée par l'utilisateur de la moto;
le dispositif d'acquisition de conditions (321a) est configuré pour acquérir l'un des éléments suivants : le temps de trajet souhaité (40a), la distance de trajet souhaitée (40b) et l'installation souhaitée (40d) par l'intermédiaire du terminal mobile (1); et
le sélecteur/émetteur de destination (321b) est configuré pour sélectionner la destination (30) sur la base de l'un des éléments suivants : le temps de trajet souhaité (40a), la distance de trajet souhaitée (40b), l'installation souhaitée (40d), les informations sur le type de moto (42) et les informations sur l'emplacement actuel (41).

10. Système de proposition de destination (100, 200, 300) selon l'une quelconque des revendications 3 à 9, dans lequel le sélecteur/émetteur de destination (21b, 221b, 321b) est configuré pour pouvoir transmettre la destination (30) sélectionnée de manière aléatoire aux terminaux mobiles (1) d'une pluralité d'utilisateurs qui participent à une balade à moto en groupe en tant qu'utilisateurs d'un groupe de motards formé par la pluralité d'utilisateurs.

11. Système de proposition de destination (100, 200, 300) selon la revendication 10, dans lequel le sélecteur/émetteur de destination (21b, 221b) est configuré pour accepter des destinations (30) qui sont sélectionnées de manière aléatoire parmi les utilisateurs du groupe de motards, transmettre les destinations (30) acceptées par les utilisateurs du groupe de motards comme alternatives pour les candidats à la destination (30) aux utilisateurs, et acquérir, à partir des terminaux mobiles (1), des informations sur les entrées de sélections d'une par les utilisateurs du groupe de motards parmi les candidats pour la destination (30) qui sont sélectionnés de manière aléatoire, et sélectionner l'un des candidats pour la destination (30) qui dispose du plus grand nombre de sélections comme destination potentielle (30).

12. Système de proposition de destination (100, 200, 300) selon les revendications 10 ou 11, dans lequel le sélecteur/émetteur de destination (21b, 221b, 321b) est configuré pour pouvoir transmettre aux terminaux mobiles (1) des utilisateurs du groupe de motards la destination (30) sélectionnée par un représentant du groupe de motards parmi les destinations candidates (30) sélectionnées de manière aléatoire.

13. Système de proposition de destination (100, 200, 300) selon la revendication 10, dans lequel
le ou les points peuvent être fournis par un utilisateur prédéterminé à un autre utilisateur du groupe de motards; et
le fournisseur de bonus (21d, 221b, 321b) qui est le processeur et qui est configuré pour acquérir des informations sur l'utilisateur qui reçoit le ou les points à partir du terminal mobile (1), et pour fournir le ou les points à l'autre utilisateur sur la base des informations acquises sur l'utilisateur qui reçoit le ou les points.

14. Procédé de proposition de destination pour proposer une destination (30) d'un véhicule à deux roues (3) à un utilisateur en affichant la destination (30) sur un terminal mobile (1) transporté par l'utilisateur, le procédé de proposition de destination comprenant:
l'acquisition d'une ou plusieurs conditions souhaitées (40, 240, 340), qui sont une ou plusieurs conditions de la destination (30) souhaitée par l'utilisateur, et d'informations sur l'emplacement actuel (41) de l'utilisateur;
la sélection de deux ou plusieurs destinations candidates à afficher (32), qui sont des candidates pour une destination (30) à proposer à l'utilisateur, parmi une pluralité de destinations candidates (31) préalablement stockées sur la base de la ou des conditions souhaitées (40, 240, 340) et des informations sur l'emplacement actuel (41);
la sélection d'une destination appropriée comme destination (30) à définir comme destination de l'utilisateur parmi les deux ou plusieurs destinations candidates à afficher (32) en les affichant sur un écran du terminal mobile (1);
la transmission de la destination (30) sélectionnée au terminal mobile (1);
l'affichage de la destination (30) transmise sur le terminal mobile (1);
le fait de déterminer si le terminal mobile (1) et un communicateur (3a) qui est inclus dans le véhicule à cheval (3) et qui est configuré pour pouvoir communiquer avec le terminal mobile (1), sont connectés entre eux de manière communicative; et
**caractérisé par**
la sélection de manière aléatoire de la destination appropriée; et
le fait de déterminer si l'utilisateur arrive à la destination (30) sur la base des informations sur l'emplacement actuel (41) transmises depuis le terminal mobile (1) et sur la base du fait que le terminal mobile (1) et le communicateur (3a) sont connectés entre eux de manière communicative pour déterminer si l'utilisateur arrive à la destination (30).

15. Procédé de proposition de destination selon la revendication 14, comprenant en outre la fourniture d'un bonus prédéterminé à l'utilisateur si l'utilisateur arrive à la destination (30) par un fournisseur de bonus (21d) qui est un processeur.

16. Procédé de proposition de destination selon la revendication 15, dans lequel
le véhicule à enfourcher (3) peut être une moto; et
l'utilisateur se voit attribuer un ou plusieurs points par le fournisseur de bonus (21d) qui est le processeur, sous la forme d'un bonus prédéterminé échangeable contre un cadeau lié à la moto par l'utilisateur dans le cadre de l'attribution du bonus prédéterminé à l'utilisateur si celui-ci arrive à destination (30).

17. Procédé de proposition de destination selon la revendication 16, dans lequel
la sélection aléatoire d'une destination appropriée comme destination (30) comprend la destination (30) sélectionnée et les deux ou plusieurs destinations candidates à afficher (32) sont transmises au terminal mobile (1) lors de la transmission de la destination (30) sélectionnée au terminal mobile (1); et
la destination (30) et les deux ou plusieurs destinations candidates à afficher (32) transmises sont affichées lors de l'affichage de la destination (30) transmise sur le terminal mobile (1).

18. Procédé de proposition de destination selon la revendication 17, dans lequel
la ou les conditions souhaitées (40, 240, 340) comprennent l'une des suivantes: un temps de trajet souhaité (40a), qui est un temps de trajet souhaité par l'utilisateur de la moto, et une distance de trajet souhaitée (40b), qui est une distance de trajet souhaitée par l'utilisateur de la moto;
le procédé de proposition de destination comprend en outre la transmission de l'un des éléments suivants: le temps de trajet souhaité (40a) et la distance de trajet souhaitée (40b) à partir du terminal mobile (1); et
la destination (30) est sélectionnée sur la base de l'un des éléments suivants: le temps de trajet souhaité (40a), la distance de trajet souhaitée (40b) transmis depuis le terminal mobile (1), et les informations sur l'emplacement actuel (41) dans la sélection aléatoire de la destination appropriée comme destination (30).

19. Procédé de proposition de destination selon la revendication 18, dans lequel
les conditions souhaitées (40, 240, 340), les informations sur l'emplacement actuel (41), et les informations de type de moto (42), qui sont des informations sur le type de moto possédé par l'utilisateur, y compris des informations sur la cylindrée de la moto ou sur le fait que la moto est de petit ou grand format, sont transmises à partir du terminal mobile (1) lors de la transmission de l'un des éléments suivantes: le temps de trajet souhaité (40a) et la distance de trajet souhaitée (40b) à partir du terminal mobile (1); et
la destination (30) est sélectionnée sur la base de la ou des conditions souhaitées (40, 240, 340), des informations sur l'emplacement actuel (41) et des informations concernant le type de moto (42) transmises depuis le terminal mobile (1) lors de la sélection aléatoire de la destination appropriée comme destination (30).
